(19) Europäisches Patentamt
European Patent Office
Office européen des brevets

(11) **EP 1 843 295 B1**

(12) **FASCICULE DE BREVET EUROPEEN**

(45) Date de publication et mention
de la délivrance du brevet:
**01.11.2017 Bulletin 2017/44**

(51) Int Cl.:
***G06T 7/20*** (2017.01)    ***G01C 21/16*** (2006.01)

(21) Numéro de dépôt: **07290386.7**

(22) Date de dépôt: **30.03.2007**

(54) **Procédé de restitution de mouvements de la ligne de visée d'un instrument optique**

Verfahren zur Wiedergabe von Bewegungen der Visierlinie eines optischen Instruments

Method of recreating the movements of the line of sight of an optical instrument

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **03.04.2006 FR 0602904**

(43) Date de publication de la demande:
**10.10.2007 Bulletin 2007/41**

(73) Titulaire: **Airbus Defence and Space SAS 78130 Les Mureaux (FR)**

(72) Inventeurs:
• **Crombez, Vincent**
  **31120 Lacroix Falgarde (FR)**
• **Polverini, Umberto**
  **31320 Pechabou (FR)**
• **Flandin, Grégory**
  **31000 Toulouse (FR)**

(74) Mandataire: **Cabinet Plasseraud 66, rue de la Chaussée d'Antin 75440 Paris Cedex 09 (FR)**

(56) Documents cités:
**FR-A- 2 828 314**

• **MORIMOTO C ET AL: "Fast Electronic Digital Image Stabilization for Off-Road Navigation" REAL-TIME IMAGING, ACADEMIC PRESS LIMITED, GB, vol. 2, no. 5, octobre 1996 (1996-10), pages 285-296, XP004419665 ISSN: 1077-2014**
• **KIM S P ET AL: "Subpixel accuracy image registration by spectrum cancellation" STATISTICAL SIGNAL AND ARRAY PROCESSING. MINNEAPOLIS, APR. 27 - 30, 1993, PROCEEDINGS OF THE INTERNATIONAL CONFERENCE ON ACOUSTICS, SPEECH, AND SIGNAL PROCESSING (ICASSP), NEW YORK, IEEE, US, vol. VOL. 4, 27 avril 1993 (1993-04-27), pages 153-156, XP010110958 ISBN: 0-7803-0946-4**
• **YAO Y S ET AL: "Electronic image stabilization using multiple visual cues", PROCEEDINGS OF THE INTERNATIONAL CONFERENCE ON IMAGE PROCESSING. (ICIP). WASHINGTON, OCT. 23 - 26, 1995; [PROCEEDINGS OF THE INTERNATIONAL CONFERENCE ON IMAGE PROCESSING. (ICIP)], LOS ALAMITOS, IEEE COMP. SOC. PRESS, US, vol. 1, 23 October 1995 (1995-10-23), pages 191-194, XP010196792, DOI: 10.1109/ICIP.1995.529578 ISBN: 978-0-7803-3122-8**

**Description**

L'invention concerne le domaine de l'exploitation d'une séquence d'images successives fournies par un instrument d'observation optique monté sur un porteur animé d'un mouvement tel que les images successives représentent une bande d'une scène observée, avec un recouvrement entre images.

L'invention trouve une application particulièrement importante, bien que non exclusive, dans l'exploitation en temps différé des images fournies par un instrument d'observation de la terre porté par un satellite ou un aéronef en déplacement suivant une trajectoire sensiblement connue.

La reconstitution des variations de l'orientation de la ligne de visée de l'instrument au cours des prises de vues successives est essentielle pour l'exploitation des images obtenues, afin d'en restituer la géométrie et pouvoir localiser les objets observés dans un repère géo-référencé avec le degré de précision désiré.

La restitution de l'orientation à chaque prise de vues par rapport à un repère de référence est en particulier requise pour avoir de bonnes performances dans le cas des satellites utilisant un instrument de prise de vues dans le domaine visible/IR.

Pour chaque prise de vue, l'instrument sera orienté et stabilisé dans une direction donnée, avec éventuellement une petite vitesse de rotation résiduelle contrôlée par l'utilisateur. Pendant les prises de vue, les informations délivrées par les détecteurs-barrettes seront stockées, puis retransmises et traitées au sol afin de reconstituer des images bi-dimensionnelles des zones observées.

La reconstitution de ces images nécessite la restitution des mouvements de la ligne de visée lors des prises de vue, celle-ci n'étant pas absolument stable lors des prises de vue, du fait de mouvements résiduels en roulis, tangage, lacet du satellite, et ce dans une plage de fréquence pouvant aller jusqu'à plusieurs centaines de Hertz du fait de perturbateurs haute fréquence (vibrations générées par certains équipements). De plus, des effets purement géométriques doivent être pris en compte. Par exemple, la prise de vues d'une bande de terrain présentant un relief accidenté non nécessairement connu conduit à des effets différents des variations de ligne de visée suivant l'altitude du point observé.

Suivant l'état de l'art, la détermination de l'orientation et des mouvements angulaires de la ligne de visée à tout instant pendant les prises de vue est réalisée grâce à l'utilisation de capteurs de position et vitesse angulaires, tels des senseurs stellaires et des gyroscopes. Cependant, l'augmentation de la résolution des instruments exige une restitution d'attitude de plus en plus précise, difficile à atteindre avec de tels capteurs. En effet, les capteurs d'étoiles fournissent une précision de mesure d'attitude très élevée, mais dans une gamme de fréquence relativement basse (typiquement inférieure à quelques Hertz). Les gyroscopes sont eux aussi limités en bande passante (typiquement inférieure à quelques dizaines de Hertz), souvent à cause de leurs électroniques. D'autre part, ces deux types de senseurs ne fournissent pas une mesure directe de la ligne de visée de l'instrument puisque par nature, ils ne fournissent que des informations sur leur propre orientation. Ceci est particulièrement limitatif lorsqu'il s'agit de restituer des mouvements de ligne de visée à haute fréquence, typiquement 50-150 Hertz, car les vibrations à ces fréquences là affectent différemment la ligne de visée de l'instrument et les senseurs eux-mêmes. Le document FR2 828 314 divulgue un procédé de stabilisation électronique des images d'une scène d'un appareil de prise de vues suivant l'état de l'art, dans lequel on filtre les images de la scène pour n'en retenir que les basses fréquences spatiales. La présente invention vise à fournir un procédé et un dispositif de mesure et de restitution des mouvements de la ligne de visée d'un instrument optique et de l'orientation de la ligne de visée à chaque prise de vue par rapport à un repère initial, et cela sans nécessairement utiliser les mesures de senseurs externes de position et vitesse angulaire, mais plutôt en utilisant directement les images prises par l'instrument lui-même.

Dans ce but, l'invention propose notamment un procédé de restitution des mouvements d'une ligne de visée en roulis, tangage et lacet d'un instrument d'observation pendant une prise de vue, suivant lequel, à partir de l'instrument monté sur un porteur en déplacement, on forme, pendant la durée [Ti, Tf] de prise de vue, au moins deux images contenant une même portion d'une scène, les prises de ces deux images étant décalées dans le temps d'une valeur connue T sensiblement constante, et on détermine lesdits mouvements de la ligne de visée de l'instrument au cours de la prise de vue par au moins les étapes suivantes :

   a) une étape de sélection et de mise en correspondance de plusieurs zones caractéristiques homologues prises au voisinage d'instants respectivement Tn et Tn + T (n= 1 à N) répartis entre Ti et Tf dans lesdites images de la même portion de la scène de façon à obtenir une mesure de la position aux instants respectivement Tn et Tn+T (n=1 à N) desdites zones homologues, ou d'au moins un point particulier de ces zones, dans chacune des deux images de ladite portion,

   b) une étape de calcul des variations angulaires de la ligne de visée de l'instrument entre les instants Tn et Tn+T (n=1 à N) par recalage d'un modèle de mise en correspondance des images, ledit modèle donnant pour tout point d'une première image prise à l'instant Tn (n=1 à N), une estimation de la position de son point homologue dans une seconde image prise à l'instant Tn+T en fonction de paramètres comprenant en particulier l'orientation de la ligne de visée de l'instrument à l'instant Tn et lesdites variations angulaires de cette ligne de visée entre Tn et Tn + T, le recalage du modèle consistant à calculer les valeurs desdites variations angulaires qui minimisent une fonction, par exemple quadratique, des écarts entre la position des zones homologues de la seconde image prédites par le modèle, et la position desdites zones homologues de la seconde image telle que restituée à l'étape (a), et

c) une étape de reconstitution des mouvements de la ligne de visée sur l'horizon de temps [Ti, Tf] par intégration, filtrage et éventuellement ré-échantillonnage de l'ensemble des variations élémentaires reconstituées à l'étape (b).

On entend par "zone caractéristique", par exemple une portion de la scène de typiquement quelques centaines de pixel qui contient des informations radiométriques (luminance et/ou chrominance), géométriques ou texturale la rendant apte à une mise en correspondance. On entend par « point caractéristique » un point dont le voisinage immédiat est une zone caractéristique au sens précédent. Dans la pratique, cela conduit à utiliser comme zones caractéristiques des emplacements dont les dérivées locales du second ordre de la radiométrie sont non nulles dans deux directions distinctes.

L'étape (a) peut mettre en oeuvre une mise en correspondance de zones caractéristiques d'images fondée sur une ressemblance géométrique, radiométrique ou texturale entre au moins deux images acquises lors de la prise de vue.

Le procédé tel que défini ci-dessus permet d'obtenir une restitution relative de l'orientation de la visée, par rapport à un repère initial; cette restitution relative est suffisante pour répondre aux besoins habituels, c'est-à-dire à la fourniture d'informations permettant de tenir compte de l'altération des longueurs, de superposer des bandes spectrales, de tenir compte de l'altimétrie et de superposer des images provenant de plusieurs capteurs de l'instrument sensibles dans des bandes spectrales différentes.

Mais il est également possible de mettre en oeuvre le procédé ci-dessus pour déterminer l'orientation de la ligne de visée de façon absolue dans l'espace inertiel, en complétant les indications fournies par l'instrument et les moyens de calcul associés par des indications fournies, à des intervalles de temps qui peuvent être importants, par un capteur absolu de précision, tel qu'un capteur stellaire.

Le procédé est basé sur la mise en correspondance de points ou zones de l'image pouvant être: caractéristiques (au sens énoncé précédemment), pré-déterminés indépendamment de l'image au voisinage avec ou sans connaissance a priori d'éléments particuliers présents dans la scène, sélectionnés dans un sous-ensemble de points ou zones caractéristiques.

En particulier, l'une au moins des méthodes suivantes peut être utilisée pour sélectionner les zones caractéristiques associées à une date de prise de vue Tn donnée :

- sélection des points à double gradient supérieur à un seuil donné dans une zone de l'image correspondant à la prise de vue effectuée au voisinage de l'instant Tn ;
- sélection de points ayant des positions pré-déterminées indépendamment du contenu de l'image au voisinage de ces points, avec rejet éventuel des points pour lesquels un critère de qualité de mise en correspondance est inférieur à un seuil donné ;
- sélection de points pré-déterminés donnée par une connaissance a priori d'éléments particuliers présents dans la scène ;
- sélection d'un sous-ensemble de points à partir d'un ensemble de points caractéristiques calculés par l'une des méthodes ci-dessus ou similaire, de telle sorte à maximiser la répartition spatiale desdits points, et la qualité de la mise en correspondance des zones caractéristiques au voisinage de ces points ;
- sélection d'une vignette de typiquement quelques dizaines à quelques centaines de pixels au voisinage des points afin d'améliorer la qualité de la mise en correspondance.

Les images mises en correspondance sont prises dans des bandes spectrales pouvant être identiques ou différentes. La qualité de mise en correspondance (par exemple à base de mesure de corrélation) est un critère important dans l'étape de recalage du modèle géométrique.

L'étape de mise en correspondance peut être mise en oeuvre par des procédés classiques de registration, tel que par exemple celui décrit dans l'article de KIM S P ET AL : « Subpixel accuracy image registration by spectrum cancellation » ; Image and multidimensional signal processing. MINEAPOLIS, APR. 27-30, 1993, PROCEEDINGS OF THE INTERNATIONAL CONFERENCE ON ACOUSTICS, SPEECH, AND SIGNAL PROCESSING (ICASSP), NEW YORK.

En particulier, dans l'étape (b), lorsqu'on utilise une fonction quadratique des écarts, lesdits écarts intervenant dans le critère quadratique à minimiser sont pondérés par un scalaire positif proportionnel à la qualité estimée de ladite mise en correspondance desdites zones caractéristiques entre les deux images, l'estimation de ladite qualité de mise en correspondance étant calculée suivant les méthodes de l'état de l'art (calcul de corrélation par exemple).

L'étape de reconstitution des mouvements de la ligne de visée sur l'horizon de temps [Ti, Tf] consiste à intégrer, filtrer et éventuellement ré-échantillonner l'ensemble des variations élémentaires reconstituées par recalage du modèle géométrique. Un filtrage inverse (de type Wiener ou Kalman), peut être utilisé permettant de rehausser certaines fréquences atténuées tout en limitant l'impact du bruit. Pour les basses fréquences, une autre approche consiste à ajuster un modèle analytique, par exemple estimation des coefficients d'un polynôme de degré ne dépassant pas 5 en général selon une méthode des moindres carrés. Cette étape de filtrage doit palier à un manque temporaire de données de corrélation selon une technique d'interpolation adéquate. On peut utiliser à ce stade une connaissance a priori sur le contenu fréquentiel des mouvements de ligne de visée.

En particulier, au cours de l'étape (c), on peut effectuer une intégration, un filtrage et éventuellement un ré-échantillonnage des estimées de variation d'attitude issues de l'étape (b) pour reconstituer les mouvements de la ligne de visée de l'instrument, hors composante absolue de l'orientation de la visée, sur l'intervalle de temps [Ti, Tf] par l'une au moins des méthodes suivantes :

- en utilisant un filtrage inverse, permettant de rehausser certaines fréquences atténuées tout en limitant l'impact du bruit, par exemple un filtre de Wiener ou de Kalman,
- par ajustement d'un modèle analytique, par exemple estimation des coefficients d'un polynôme de degré ne dépassant pas 5 en général selon une méthode des moindres carrés.

En l'absence de mise en correspondance de qualité suffisante des zones caractéristiques sélectionnées à l'instant Tn, on calcule avantageusement l'orientation de la ligne de visée à l'instant Tn par une interpolation des orientations de ligne de visée reconstituées par l'application du procédé à des instants antérieurs et postérieurs à Tn.

On peut utiliser la connaissance a priori du contenu fréquentiel des variations de l'orientation de la ligne de visée pour effectuer préalablement à l'étape (c) un filtrage ne retenant que les fréquences concernées.

Lorsque l'on dispose de plus de deux images, tout couple d'images fournit des informations de mouvement qui peuvent être fusionnées entre elles. La fusion peut être itérative auquel cas l'ordre des itérations intervient dans la performance finale. Les itérations peuvent s'enchaîner jusqu'à épuisement des données ou convergence du processus. Les couples d'images de plus forte corrélation fournissent une information de mouvement plus précise et plus robuste qui permet, le cas échéant, de corriger les mouvements de ligne de visée d'une image dont le contenu est moins fortement corrélé. En d'autres termes, si on utilise un nombre d'images d'une même scène supérieur strictement à deux, on peut appliquer le procédé à plusieurs couples d'images et on hybride les résultats obtenus à partir des différents couples d'images de la même scène en mettant en oeuvre un affinage global ou itératif de la connaissance courante de l'orientation de la ligne de visée lors de la prise de vue.

En particulier, on peut appliquer le procédé à un premier couple d'images avantageusement parmi les couples d'images supposées être les mieux corrélées, par exemple celles prises dans une même bande spectrale, afin d'obtenir une première reconstitution des mouvements de la ligne de visée de l'instrument au cours de la prise de vue, puis on traite un autre couple d'images en initialisant le modèle de mise en correspondance à partir des valeurs de l'orientation de la ligne de visée calculées à l'étape précédente, et ainsi de suite jusqu'à épuisement des données ou obtention de la convergence.

Avantageusement, l'instrument permet de former au moins trois images décalées dans le temps, au moins deux des images présentant une forte corrélation entre elles, et au moins une autre image faiblement corrélée avec les deux autres, et l'on corrige les mouvements de ligne de visée sur au moins une image faiblement corrélée avec les deux autres grâce à la reconstitution desdits mouvements de la ligne de visée effectuée en appliquant le procédé sur au moins un couple d'images présentant une forte corrélation entre elles.

L'initialisation du modèle de mise en correspondance peut être effectuée avec une connaissance a priori de l'orientation de la ligne de visée au cours de la prise de vue. Cette connaissance a priori peut être issue d'une consigne d'orientation ou d'une mesure dérivée de senseurs d'attitudes tels que capteurs stellaires, gyromètres, etc, ou d'une connaissance de la position absolue à la surface du globe terrestre de zones caractéristiques reconnaissables dans l'image, ou d'une hybridation de telles connaissances. Les effets de parallaxe peuvent être pris en compte dans le modèle de mise en correspondance, en utilisant une connaissance a priori du relief des scènes observées.

Le procédé selon l'invention et tel que présenté ci-dessus s'applique avantageusement au calcul de l'orientation de la ligne de visée d'un instrument optique de prise de vue embarqué à bord d'un satellite, cette application se caractérisant en ce que :

- ledit instrument comprend dans son plan focal au moins un détecteur de type barrette de typiquement 1 à quelques dizaines de lignes et comprenant chacune quelques 1,000 à 10,000 pixels,
- ledit satellite est placé sur une orbite défilante,
- le satellite est pointé de telle sorte que ledit au moins un détecteur de type barrette balaie la zone à observer lors des prises de vue, et
- on applique le procédé tel que défini ci-dessus pour estimer l'orientation de la ligne de visée de l'instrument au cours d'une prise de vue.

En variante, l'application est telle que :

- l'instrument de prise de vue comporte toujours, dans son plan focal, au moins un détecteur de type barrette,
- la ligne de visée de l'instrument est contrôlée de sorte que ledit au moins un détecteur balaie la surface du globe terrestre, soit par la rotation du satellite, soit grâce au balayage d'un miroir orientable placé sur le chemin optique de l'instrument, et
- on applique le procédé de l'invention, tel que défini ci-dessus, pour estimer l'orientation de la ligne de visée de l'instrument au cours d'une prise de vue.

Dans cette variante, le satellite peut également être placé sur une orbite défilante, mais l'orbite du satellite peut aussi être géostationnaire.

En variante également, et quel que soit le cas d'application précédemment envisagé, l'instrument de prise de vue peut comprendre, dans son plan focal, au moins deux détecteurs de type barrette, les barrettes étant alignées de sorte que leurs lignes et colonnes soient respectivement sensiblement parallèles, et les deux barrettes de chaque paire de barrettes, dont au moins une paire est ainsi dans le plan focal, étant séparées l'une de l'autre d'une distance de typiquement quelques fractions de mm à quelques mm dans le plan focal, les détecteurs observant ainsi approximativement la même portion de la scène lors d'une prise de vue, avec un décalage temporel dépendant directement de la distance entre les détecteurs au plan focal.

En variante encore, chaque ligne des détecteurs du plan focal peut former une image de la scène, et un sous-ensemble des images ainsi créées par l'ensemble des détecteurs du plan focal peut être traité suivant le procédé de l'invention pour restituer l'orientation de la ligne de visée de l'instrument.

Selon une autre variante, l'instrument comporte au moins un détecteur principal de type barrette dans son plan focal, ce détecteur étant utilisé pour assurer la prise d'image suivant des caractéristiques de mission désirées (largeur de fauchée, résolution, qualité image, etc.), on ajoute dans le plan focal à des fins d'application du procédé selon l'invention et tel que défini ci-dessus, au moins un détecteur dédié, de taille plus petite, typiquement une matrice de 100x100 pixels, ou une barrette de 1000x10 pixels, et on place ledit détecteur dédié à une certaine distance dudit détecteur principal et on applique le procédé selon l'invention.

Qu'au moins deux détecteurs principaux de type barrette alignés et espacés, ou au moins un détecteur principal de type barrette et un détecteur dédié espacés l'un de l'autre soient disposés dans le plan focal de l'instrument, la séparation des détecteurs dans ce plan focal peut être optimisée en vue de la reconstitution des mouvements de la ligne de visée dans une bande de fréquence donnée.

Enfin, selon encore une autre variante, ledit instrument ne comprend qu'un seul détecteur au plan focal, balayant la scène, et le procédé selon l'invention et tel que défini ci-dessus est appliqué à au moins deux images formées à partir d'au moins deux lignes du détecteur.

Dans ce cas, le choix des au moins deux lignes du détecteur utilisées pour former les au moins deux images peut être optimisé en vue de la reconstitution des mouvements de la ligne de visée dans une bande de fréquence donnée.

La restitution d'orientation de la ligne de visée par traitement d'images peut être utilisée dans un processus d'optimisation de la qualité de l'image fournie par l'instrument en ce qui concerne l'altération des longueurs, la restitution planimétrique, la restitution altimétrique, la superposition d'images provenant de capteurs multiples et/ou formées à des instants différents. Le procédé permet également de mesurer des micro-vibrations de l'instrument dans la limite où leur fréquence ne dépasse pas celles restituables par le procédé.

D'autres caractéristiques et avantages de l'invention ressortiront de la description donnée ci-dessous, à titre non limitatif, d'exemples de réalisation décrits en référence : aux dessins annexés sur lesquels :

- la figure 1 est un schéma de principe montrant la formation d'images de portions successives d'une bande de terrain observée à partir d'un satellite défilant muni d'un instrument de visée au nadir ;
- la figure 2 est un schéma montrant l'effet d'une variation de la ligne de visée en roulis entre deux images successives ;
- la figure 3, similaire à la figure 2, montre l'effet d'une variation de la ligne de visée en tangage ;
- la figure 4 est un organigramme du procédé ;
- la figure 5 montre l'utilisation de la modélisation ;
- la figure 6 est un schéma de principe de la troisième étape du procédé ;
- les figures 7 et 8 montrent les caractéristiques d'un filtre pseudo-inverse d'estimation utilisable par cette troisième étape.
- les figures 9 et 10 montrent l'effet du coefficient d'atténuation du bruit sur les caractéristiques d'un filtre pseudo-inverse ;
- les figures 11 et 12, similaires aux figures 9 et 10, montrent l'effet du décalage temporel $\tau$;

- la figure 13 montre l'effet obtenu sur la restitution de la combinaison de plusieurs couples d'images ;
- la figure 14 montre l'effet du décalage temporel τ sur le rapport entre la précision de restitution et l'erreur de mesure ;
- la figure 15 est un logigramme de l'ensemble du procédé ;
- la figure 16 est une vue analogue à la figure 1, pour la formation d'images successives d'une bande de terrain observée à partir d'un satellite spinné équipé d'un instrument optique de prise de vue ;
- la figure 17 est une vue analogue à la figure 1 pour un satellite non-spinné équipé d'un miroir orientable sur le chemin optique de l'instrument optique et balayant une bande de terrain au sol, et
- les figures 18, 19 et 20 représentent trois agencements possibles d'un ensemble de détection dans le plan focal de l'instrument de prise de vue des satellites des figures 1, 16 et 17, respectivement avec un seul détecteur de type barrette multilignes, trois détecteurs barrettes multilignes espacés l'un de l'autre, et un détecteur barrette principal multilignes, associé à un détecteur dédié plus petit que le détecteur principal et espacé de ce dernier.

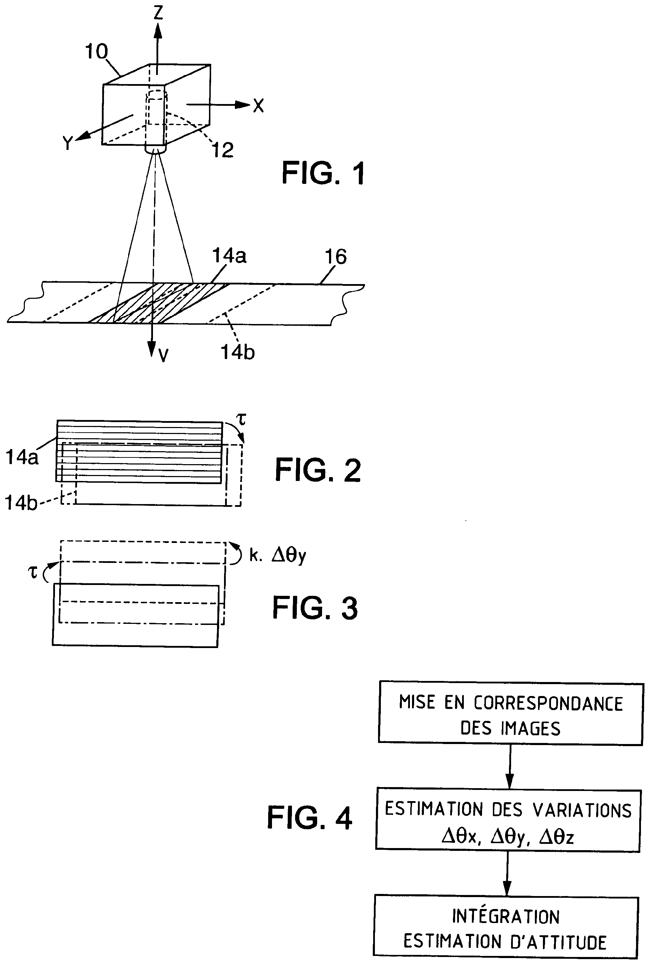

La figure 1, qui est un simple schéma où l'échelle n'est pas respectée, montre un satellite 10 dont la plateforme porte un instrument 12 ayant en son plan focal un détecteur matriciel à deux dimensions, commandé de façon que deux images successives, par exemple 14a et 14b, prises à des instants séparés d'un intervalle de temps T, présentent un recouvrement notable, qui sera généralement au moins égal à la moitié de l'image. Chaque image est constituée par une matrice de pixels, regroupés en lignes (perpendiculaires à la direction du déplacement) et colonnes (parallèles à la direction du déplacement). Dans le cas d'un appareil à détecteur constitué par une barrette, fonctionnant sur le principe dit "push-broom", la barrette est orientée dans le sens des lignes de l'image à obtenir.

La plateforme du satellite 10, et en conséquence l'instrument, sont susceptibles de présenter des mouvements autour des trois axes x (roulis), y (tangage) et z (lacet). Tous ces mouvements conduisent à des variations de l'orientation de la ligne de visée V.

Les variations de la ligne de visée en roulis, tangage et lacet peuvent également être dues à des vibrations se propageant dans l'instrument.

Au lieu de comporter un seul détecteur permettant de prendre des vues successives avec un recouvrement, l'appareil peut comporter deux détecteurs séparés dans le champ dans la direction du balayage, se traduisant par un intervalle de temps moyen T entre l'acquisition d'un point par un des détecteurs et l'acquisition du même point par l'autre détecteur.

La figure 2 montre un décalage entre deux images successives provoqué par un mouvement de roulis Δθx (autour de l'axe x). Au lieu de présenter la disposition relative indiquée par le cadre en traits pleins et le cadre en traits mixtes sur la figure 2, les images 14 a et 14 b ont une disposition relative du genre montré en 14a et 14b, c'est-à-dire un décalage dans la direction des lignes.

Comme le montre la figure 3, une modification d'orientation en tangage conduit, au premier ordre, à un décalage supplémentaire de l'image dans le sens des colonnes de pixels, constant sur toute la largeur du champ, égal à k. Δθy (Δθy étant la variation d'orientation autour de l'axe de tangage et k étant une constante).

Une variation Δθz autour de l'axe de lacet se traduit par une rotation de l'image qui cause essentiellement une modification de position dans le sens des colonnes de pixels, variable sur la largeur du champ.

Enfin une erreur de positionnement de la ligne de visée en lacet se traduit au premier ordre par un décalage de l'image dans le sens des lignes, constant sur la largeur du champ, qui généralement ne pourra être décorrélé de celui provoqué par une variation de roulis.

Lorsque la ligne de visée est faiblement dépointée par rapport au nadir, les erreurs de positionnement en roulis et en tangage sont modifiées, mais d'un montant qui pourra souvent être négligé.

Le procédé selon l'invention peut être considéré comme comportant trois étapes successives, indiquées sur la figure 4.

La première étape consiste en un traitement d'images destiné à mettre en correspondance les différentes images disponibles (au moins deux pour une même portion), ayant acquis une même portion de la zone à des instants différents, cela en exploitant leur ressemblance radiométrique, géométrique ou texturale.

La seconde étape consiste à déduire, à partir de l'identification de plusieurs couples de points homologues, sur une durée courte, l'information de variation angulaire autour des trois axes x, y et z, cela en prenant en compte un modèle géométrique du dispositif, défini plus loin, et en l'affinant. Deux couples de points homologues dans deux images permettent en principe de déterminer les variations. Mais l'utilisation de plus de deux couples permet d'opérer un filtrage sur le bruit de corrélation et aussi sur les erreurs liées au relief de la scène observée, provoquées notamment par la parallaxe.

La troisième étape consiste en une intégration des mesures pour remonter à une estimation de l'attitude à chaque prise de vues, par rapport à un repère initial. Ce repère ne peut être que relatif si le traitement de l'image est seul utilisé. Il peut être rendu absolu par un recalage périodique à partir d'une restitution absolue d'attitude dans un repère inertiel à l'aide de capteurs supplémentaires, tels que des gyros ou surtout des capteurs stellaires.

Une fois les images numérisées en sortie de chaîne vidéo, les différentes étapes du procédé peuvent être réalisées par un dispositif informatique constitué par exemple d'une chaîne d'acquisition et de pré-traitement des données, d'une chaîne de traitement principal incluant du matériel (micro-processeur, FPGA, ASIC) et du logiciel, l'ensemble permettant de réaliser les étapes de traitement selon le procédé, la mise en oeuvre de ces logiciels fournissant les variables numériques désirées, c'est-à-dire en particulier les angles et les vitesses de rotation de la ligne de visée de l'instrument considéré.

On décrira maintenant plus en détail les étapes ci-dessus, en utilisant les notations suivantes pour simplifier :

DSP : densité spectrale de puissance
FTM : fonction de transfert de modulation
MNE : modèle numérique d'élévation (ou modèle numérique de terrain)
PAN : panchromatique (image)
XS : multispectrale (image)
PIR : proche infrarouge (image)

Le procédé de restitution d'attitude qui va maintenant être décrit de façon plus complète, permet notamment d'améliorer les performances de restitution en ce qui concerne :

- la superposabilité de bandes panchromatiques et XS de travail de deux détecteurs équipant l'instrument et fournissant deux images de la même scène obtenues avec un décalage temporel.
- la superposabilité des pixels d'une bande panchromatique dans des zones inter barrettes (dans le cas d'un balayage push-broom avec un détecteur à barrette),
- la prise en compte de l'altération des longueurs par suite des mouvements,
- l'amélioration de la précision sur la composante temporelle non linéaire de l'attitude de l'instrument.

La mise en correspondance sera souvent réalisée au cours de l'étape a) à partir d'images obtenues dans des bandes spectrales différentes, dans la mesure où une corrélation est susceptible d'être faite. Mais certaines bandes spectrales corrèlent mal les unes avec les autres, du fait qu'elles ont des contenus radiométriques différents. C'est par exemple le cas entre la bande PIR et les bandes dans le visible. Dans ce cas, la restitution obtenue par comparaison des images dans les bandes panchromatiques et XS (ou entre deux bandes dans le visible) permet d'appliquer ensuite la restitution d'images à la bande PIR ; plus généralement, la restitution permet de superposer des images dans différentes bandes spectrales de l'instrument ayant une faible corrélation radiométrique.

La détermination de l'altération des longueurs peut notamment être effectuée à partir de la mise en correspondance entre pixels PAN et XS.

La détermination de l'attitude relative à partir du traitement d'images a l'intérêt de donner une information linéaire, qui peut être intégrée dans le temps pour adapter la mesure effectuée à la durée (ou « horizon ») requise, généralement de plusieurs secondes. Cette approche est beaucoup plus favorable que l'utilisation de gyroscopes, qui exigent une intégration longue des mesures et provoquent une accumulation des erreurs. La mise en correspondance entre les pixels panchromatiques et XS permet notamment d'utiliser un intervalle temporel important et donc de limiter l'amplitude des erreurs d'intégration.

Comme on l'a indiqué plus haut, la seconde étape du procédé met en oeuvre une modélisation géométrique de mise en correspondance des prises de vues.

On donnera maintenant tout d'abord un exposé général de mise en oeuvre des différentes étapes, puis des indications plus détaillées sur certaines étapes.

## 1- ETAPES SUCCESSIVES

### 1. *Mise en correspondance des images*

La mise en correspondance d'images peut s'effectuer par des techniques connues de filtrage, par transformée de Fourier, par décomposition en ondelettes. Le procédé utilise une détermination d'un certain nombre de points caractéristiques, identifiés comme présentant des voisinages à forte variation de radiométrie (typiquement dérivée seconde par rapport à la distance supérieure à un seuil dans au moins deux directions différentes) et recherche des points homologues des points caractéristiques dans au moins une autre image en exploitant des ressemblances. Il est souhaitable d'utiliser plus de deux couples de points, pour tenir compte d'erreurs de mise en correspondance possibles pouvant avoir différentes origines, telles que la qualité radiométrique des images, la qualité géométrique des images et le contenu spectral des images.

Dans la pratique, les techniques de registration actuellement disponibles permettent d'arriver, dans le cas d'images très ressemblantes, à une résolution pouvant aller jusqu'à 0,01 pixel pour des images correspondant à des bandes spectrales identiques et 0,1 pixel pour la mise en correspondance d'images dans deux bandes spectrales différentes.

## 2. Estimation des variations angulaires

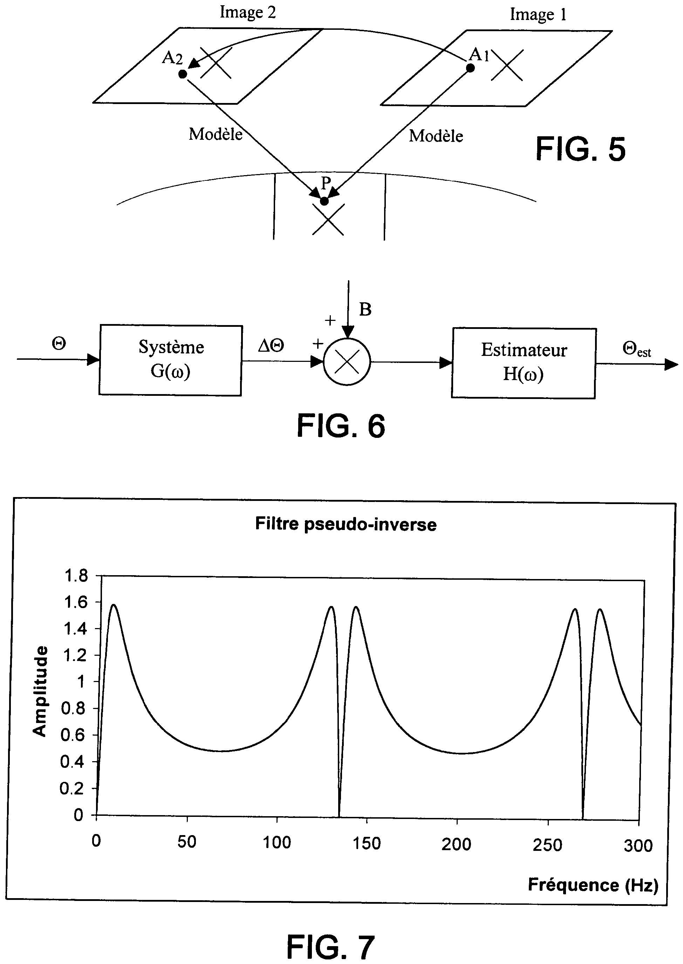

La mise en correspondance des images permettra, pour la portion commune de deux images successives, de déterminer des couples de points homologues, comme indiqué par exemple schématiquement sur les images 1 et 2 de la figure 5.

Par ailleurs, la modélisation géométrique du système optique permet d'associer à tout point d'une image, tel que le point A1 de l'image 1, une position correspondante P dans la scène observée et, inversement, le modèle inverse associe à tout point de la scène, par exemple au point P, le point A1 ou A2 correspondant dans l'image 1 ou 2.

La combinaison des modèles d'un couple d'images permet ainsi d'avoir une estimation de la correspondance entre ces images, mais avec des incertitudes qui vont être réduites par la prise en compte de l'information de correspondance acquise par traitement des images au cours de l'étape 1.

Les incertitudes portent notamment sur :

- la position et l'orientation de l'instrument,
- la datation des données correspondant à l'image 1 et à l'image 2,
- la calibration géométrique de l'instrument,
- l'altitude du point observé, chaque fois que la scène n'est pas plane,
- le mouvement de la terre.

On considérera maintenant, en succession, un modèle de localisation dans l'image et un modèle de résidu.

Modèle de localisation dans l'image

On désignera par $\mathrm{Loc}\Theta_1$ la fonction qui associe, à tout pixel de l'image 1, une estimation des coordonnées au sol du point correspondant P.

$$\mathrm{Loc}\Theta_1(M(i,j)) = P$$

où i et j correspondent à l'emplacement en ligne et colonne.

P est le point visé au sol, que l'on peut, par exemple, repérer par des coordonnées géographiques $(\lambda, \varphi, h)$ qui sont respectivement sa longitude, sa latitude et son altitude,
$\Theta_1$ représente l'ensemble des paramètres du modèle géométrique associé à l'image 1. Ces paramètres peuvent comporter l'attitude du repère de visée, la position du satellite, la datation des paramètres, la modélisation géométrique de l'instrument (direction de visée de chacun des détecteurs dans le repère de visée) et l'altitude des points observés.

Modèle de résidus

On désignera ensuite par $\mathrm{Loche}\Theta_1/\Theta_2$ la fonction qui associe à tout pixel de l'image 1, une estimation de son homologue dans l'image 2. Cette fonction résulte de la combinaison du modèle direct de l'image 1 et du modèle inverse de l'image 2 :

$$\mathrm{Loc}\Theta_1/\Theta_2 = \mathrm{Loc}\Theta_1 \ o \ (\mathrm{Loc}\Theta_2)^{-1}$$

On appellera cette fonction le modèle géométrique de mise en correspondance, ou plus simplement modèle de mise en correspondance.

On désignera par H la fonction de corrélation sur image qui, à un point M1 de l'image 1, associe par corrélation son homologue M2 dans l'image 2.

$$H(M_1(i_1, j_1)) = M_2(i_2, j_2)$$

Idéalement, on aurait $H = \mathrm{Loc}\Theta_1/\Theta_2$.

En pratique, H est affecté par l'erreur de mise en correspondance des images et $Loc\Theta_1/\Theta_2$ est affecté par l'incertitude sur la connaissance des paramètres du modèle, et en particulier, des paramètres d'attitude du repère de visée.

On désignera par $Res\Theta_1/\Theta_2$ la fonction résidu qui, pour tout point de l'image 1, associe l'écart entre le point M2 de l'image 2 obtenu par la fonction H et le point M'2 obtenu par $Loc\Theta_1/\Theta_2$. On a alors les formules (1) ci-dessous :

$$Res\Theta_1/\Theta_2\,(M1(i_1, j_1)) = M_2.M'_2 = (di, dj) = (i'_2 - i_2, j'_2 - j_2)$$

avec $M_2(i_2,j_2) = Loc\Theta_1/\Theta_2\,(M1(i_1,j_1))$

$M'_2(i'_2,j'_2) = H\,(M1(i_1,j_1))$, point homologue, obtenu par corrélation d'image par exemple.

A partir de plusieurs couples de points homologues dans les deux images, obtenus par corrélation, et en considérant un modèle géométrique initial pour chacune des deux images, on accède alors à une mesure de résidu.

Effet des erreurs

A ce stade, il convient d'analyser les sources d'erreurs.

Les sources d'erreur peuvent être réparties en :

1) Erreurs de mise en correspondance, réalisées lors de l'association des images point à point, sur des critères radiométriques, provenant du bruit dans l'image, d'une faible structuration éventuelle de l'image, différence de contenu dans les images, de la méthode de calcul de la mise en correspondance, etc....

2) Erreurs système qui interviennent dans la correspondance entre les écarts angulaires de la ligne de visée et les résidus mesurés en coordonnées pixel, dues à la méconnaissance de la modélisation géométrique du système.

3) Erreurs de la méthode qui permet le calcul des écarts angulaires (filtrage de Wiener ou Kalman, moindres carrés ou autre)

Le résidu mesuré, désigné par la fonction $Res\Theta_1/\Theta_2$, intègre les erreurs listées ci-dessus, plus les erreurs de variation d'attitude que l'on souhaite mesurer.

La démarche suivie consiste à traduire l'effet de chacune des erreurs sur la mesure de résidu, en équivalent pixel et à en déduire l'erreur d'estimation angulaire, en négligeant les causes d'erreurs dont on a constaté qu'elles sont les plus faibles.

Chacune des composantes di et dj de la fonction de résidu est considérée comme fonction scalaire. L'analyse de ces fonctions peut se faire par linéarisation autour du point d'origine :

$$di(M_1) = Ei(M_1) + \sum_\theta \frac{\partial di}{\partial \theta}(M_1).d\theta$$

$$dj(M_1) = Ej(M_1) + \sum_\theta \frac{\partial dj}{\partial \theta}(M_1).d\theta$$

où

Ei et Ej sont les erreurs de mise en correspondance réalisées par H,

$d\theta$ désigne l'incertitude sur la connaissance du paramètre $\theta$ quelconque dans $\Theta_1$ et $\Theta_2$, $\dfrac{\partial di}{\partial \theta}$ et $\dfrac{\partial dj}{\partial \theta}$ sont les sensibilités du résidu à l'incertitude $d\theta$ au point $M_1$.

On a vérifié qu'une variation de roulis crée un décalage dans la direction des lignes mais quasiment pas dans celle des colonnes, qu'une variation de tangage ne crée pratiquement qu'un décalage dans la direction des lignes, qu'une variation en lacet n'est pratiquement sensible qu'en bord de champ et en direction des colonnes et peut être négligée, que les coefficients de sensibilité aux variations angulaires dépendent assez peu de l'angle de visée qui se traduit surtout par un décalage quasi-constant en colonne.

On a également vérifié que les autres causes ont un effet proportionnel à l'intervalle temporel d'acquisition (c'est à dire à la distance entre barrettes de détection) et que beaucoup de leurs effets sont négligeables, dans la mesure où le dépointage est faible.

Pour réduire les volumes de calcul, le procédé utilisera en général une modélisation linéaire au premier ordre et une approximation du modèle au premier ordre.

Modélisation linéaire du résidu au 1" ordre

La linéarisation du résidu consiste à en faire une approximation selon la formulation linéaire suivante :

$$di = \sum_{\theta} C_i(j).d\theta + Ei_{mes} + Ei_{lin}$$

$$dj = \sum_{\theta} C_i(j).d\theta + Ej_{mes} + Ej_{lin}$$

où

$E_{mes}$ sont les erreurs de mise en correspondance image
$E_{lin}$ sont les erreurs de modélisation linéaire

Les coefficients C dépendent du dépointage ainsi que de la position du point caractéristique dans le champ

Approximation du modèle au 1$^{er}$ ordre

Dans la mesure où on ne cherche pas à résoudre les ambiguïtés, la modélisation linéaire est réduite, au 1$^{er}$ ordre, à :

$$di = C_{\Delta T}(j).d\Delta T + C_{\Delta T}(j).d\Delta L + C_h(j).dh + Ei_{mes} + Ei_{lin} + Ei_{\text{1erordre}}$$
$$dj = C_{\Delta R}(j).d\Delta R + Ej_{mes} + Ej_{lin} + Ej_{\text{1erordre}}$$

$$(2)$$

où $E_{\text{1erordre}}$ sont les erreurs liées à cette nouvelle approximation.

*3-Restitution d'attitude par analyse harmonique*

Une fois effectués :

-    le calcul des points homologues par traitement d'image,
-    les estimations angulaires correspondantes,

on dispose d'estimations des variations angulaires, sur un intervalle temporel donné, de l'attitude du satellite autour des trois axes, échantillonnés régulièrement pendant cet intervalle.

Reste à restituer l'attitude du satellite.

On traitera ici chaque axe de manière indépendante. On désignera par :

$\theta(t)$ l'attitude correspondant à un des trois axes et par

$$\Delta\theta(t) = \theta(t+\tau) - \theta(t)$$

la variation angulaire mesurable.

On va définir un estimateur de $\theta(t)$ à partir des mesures de $\Delta\theta(t)$ et ses caractéristiques en terme de fonction de transfert. Puis on indiquera ses performances.

On peut schématiser le système comme indiqué sur la figure 6, où $\theta$ est est la valeur de $\theta$ estimée par le processus, $H(\omega)$ désigne l'estimateur et B correspond à l'erreur de mesure (erreur de corrélation, parallaxe, résidus de modèle géométrique).

Il s'agit là d'un problème de déconvolution, consistant à estimer des paramètres à partir de mesures issues d'un système linéaire spatialement invariant, modélisable par une équation de convolution, c'est-à-dire d'une analyse harmonique. L'estimateur peut notamment être formulé comme un filtrage pseudo-inverse dans l'espace de Fourier :

$$\theta(t) \quad \rightarrow \quad F(\theta(t)) = \Theta(\omega)$$

$$\theta(t+\tau) \quad \rightarrow \quad F(\theta(t+\tau)) = e^{j\omega\tau}.\Theta(\omega)$$

On a donc: $G(\omega) = e^{j\omega\tau} - 1$

Le filtre inverse associé <u>théorique</u> est: $H_{inverse}(\omega) = \dfrac{1}{e^{j\omega\tau} - 1}$ Les problèmes à résoudre pour le traitement par cette voie sont dus à ce que :

- La fonction G s'annule pour les fréquences $\omega = 2.\pi.n/\tau$ , où n est un entier quelconque. A ces fréquences, le filtre inverse n'est pas défini
- Aux alentours de ces fréquences, le gain du filtre prend des valeurs très importantes qui rehaussent le bruit considérablement.

Pour pallier aux limites du simple filtre inverse on peut utiliser d'autres techniques de filtrage, mieux à même de limiter l'impact du bruit, tel le filtrage de Wiener ou le filtrage de Kalman. Nous détaillons ici l'utilisation d'un filtrage de Wiener.

La théorie de Wiener aboutit à la définition d'un filtre optimal au sens de la minimisation de l'erreur quadratique moyenne. Dans le cas où le signal mesurable $\Delta\theta$ résulte d'un processus aléatoire stationnaire et ergodique et où le signal et le bruit de mesure sont décorrélés, l'équation du filtre dans le domaine fréquentiel est:

$$H_{Wiener} = \frac{\overline{G}}{|G|^2 + \dfrac{P_B}{P_\theta}}$$

où $P_\theta$ et $P_B$ sont respectivement les densités spectrales de puissance du signal à restaurer et du bruit. Ces deux fonctions ne sont pas connues a priori. Elles peuvent être soit estimées (algorithme récursif), soit être modélisées, soit être considérées comme constantes.

Souvent on pourra adopter la troisième hypothèse qui conduit au filtre pseudo-inverse suivant :

$$H_k = \frac{\overline{G}}{|G|^2 + k}$$

On obtient alors :

$$H_k(\omega) = \frac{e^{-j\omega\tau} - 1}{2.(1 - \cos\omega\tau) + k}$$

Et le gain de la chaîne est :

$$(3)$$

On voit que l'estimateur n'introduit pas de déphasage.

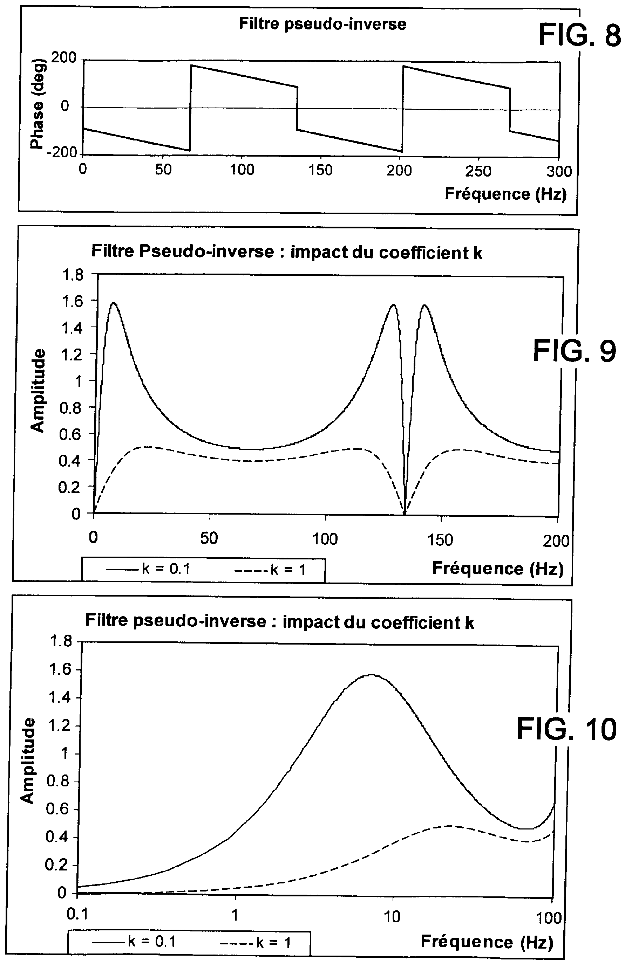

Les figures 7 et 8 montrent les caractéristiques du filtre d'estimation de Wiener obtenu en utilisant les paramètres suivants :

- mesures à une fréquence d'échantillonnage fe > 100 Hz
- durée de variation (intervalle de temps entre deux bandes consécutives) : 7.44 ms (134.4 Hz)
- coefficient k d'atténuation du bruit : 0.1

On constate que le filtre de Wiener coupe à toutes les harmoniques de fréquence $n.f_\tau$ du fait qu'à ces fréquences, il n'y a pas de signal. Le filtre inverse a tendance à diverger, en dépit du choix fait pour k, dont les figures 9 et 10 montrent l'effet avec les mêmes autres paramètres que sur les figures 7 et 8.

Une valeur de k importante correspond à un niveau de bruit de mesure de la variation angulaire important par rapport au niveau du signal (erreur initiale sur la connaissance de cette variation). Le filtrage des données est plus fort et les bandes de coupure sont plus larges.

L'accroissement de k diminue par ailleurs le gain de la chaîne complète de traitement.

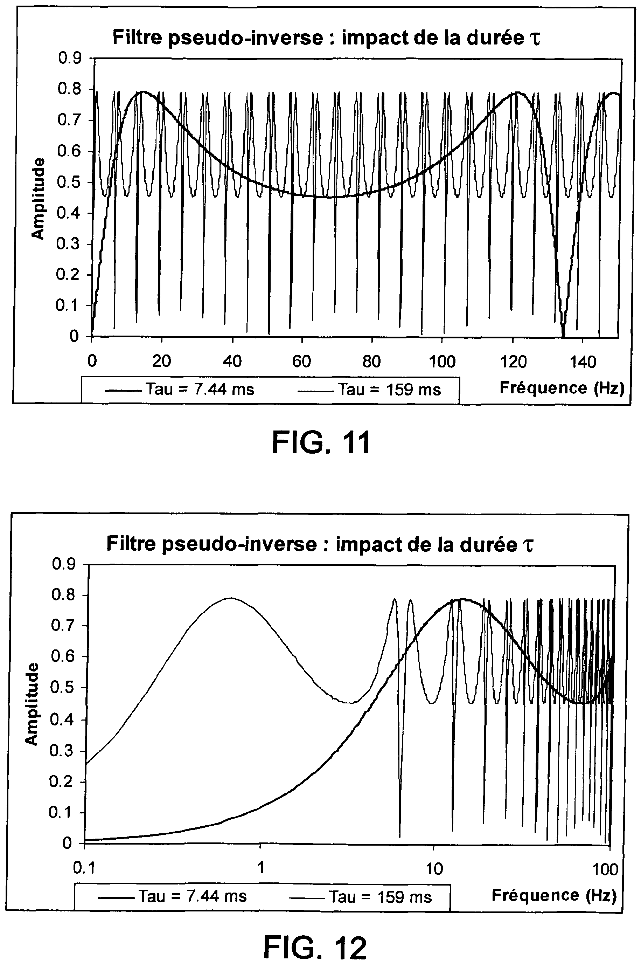

On a également déterminé l'influence de l'intervalle de temps $\tau$ entre les acquisitions avec les mêmes paramètres que sur les figures 9 et 10, en faisant varier la valeur de $\tau$. Les figures 11 et 12 montrent les coupures aux fréquences $n/\tau$. Plus on veut augmenter la fréquence, plus il faut prendre une valeur de $\tau$ petite. Mais la largeur des bandes de coupure augmente aussi, surtout pour les basses fréquences qui imposent une valeur de $\tau$ faible. On retrouve un même effet sur le gain et un compromis sera généralement nécessaire.

L'analyse qui vient d'être faite montre que la bande fréquentielle restituable dépend essentiellement de deux paramètres temporels :

- la période Te des mesures,
- la durée $\tau$ entre les deux acquisitions d'un même point (habituellement entre deux bandes spectrales).

On indiquera maintenant, à partir d'un exemple, comment estimer la bande de fréquence restituable en fonction des différents paramètres de l'instrument.

PAN / B1 : $\tau \sim 150$ ms Suivant, le théorème de Shannon, il n'est pas possible de restituer des fréquences supérieures à fe/2 = 1/2.Te. Dans la pratique, on prend habituellement une marge d'un facteur 2. Avec l'hypothèse que l'on dispose d'une mesure toute les lignes (de période Te), on en déduit que la fréquence maximale restituable est théoriquement de 1/(4.Te) Hertz. Mais les mesures par corrélation d'images sont intrinsèquement filtrées du fait de la taille de la vignette de corrélation.

Par exemple, si la hauteur de la vignette est de 10 lignes, la constante temporelle est alors de 1OxTe, soit une coupure à 1/(10.Te) Hz.

Par ailleurs, dans la bande de fréquences ainsi définie par la période d'échantillonnage des mesures, la différenciation sur un intervalle temporel $\tau$ introduit des bandes plus étroites entre lesquelles le signal est coupé. Un compromis ou une combinaison est nécessaire. En effet, une forte valeur de $\tau$ permet de descendre plus bas en fréquence, mais avec des bandes étroites. Au contraire, une faible valeur de $\tau$ donne des bandes larges, mais ne permet pas de restituer les basses fréquences.

Dans l'exemple de 4 bandes désignées par PAN, B0, B1, B2, on peut considérer l'ensemble des couples suivants :

$$\begin{aligned} &\text{PAN / B2 :} \quad \tau \sim 172{,}2\,\text{ms} \\ &\text{B1 / B2 :} \quad \tau \sim 22{,}2\,\text{ms} \\ &\text{B1 / B0 :} \quad \tau \sim 7{,}4\,\text{ms} \\ &\text{B2 / B0 :} \quad \tau \sim 14{,}8\,\text{ms} \end{aligned}$$

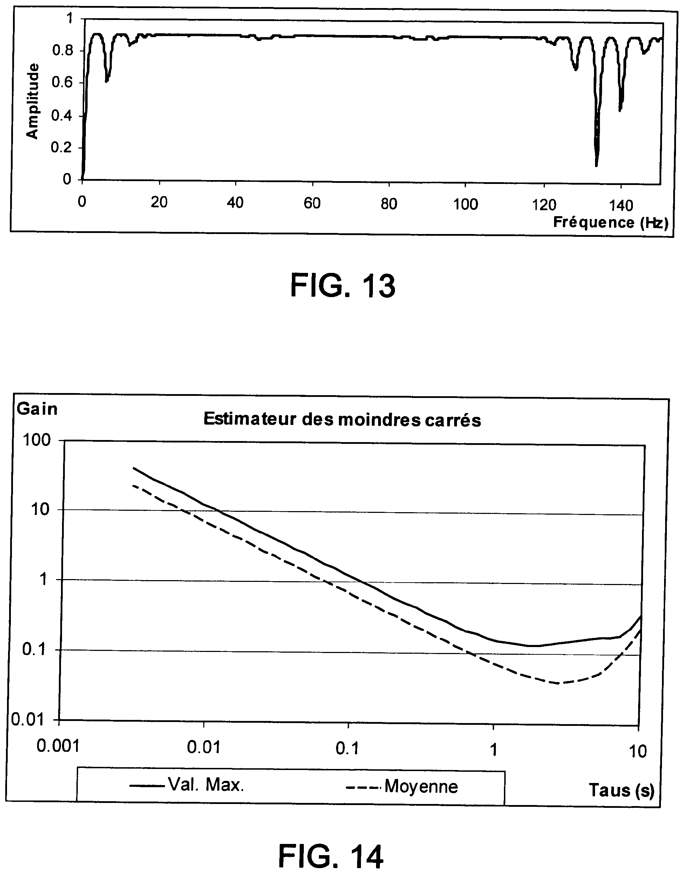

La bande restituable peut alors être définie par la valeur maximale des bandes élémentaires. La figure 13 montre comment la combinaison des couples d'images disponibles permet de restituer le signal dans une bande large.

II - DETAIL DES ETAPES

On donnera maintenant des indications supplémentaires sur la mise en oeuvre, dans le cas d'images obtenues par un détecteur fonctionnant en "push broom" et par un détecteur matriciel 2D.

1. Mise en correspondance des images

La mise en correspondance entre images implique, pour un certain de nombre de « points caractéristiques » d'une image, de rechercher leurs points homologues dans les autres images, en exploitant les ressemblances au voisinage des points dans les différentes images.

Les erreurs de mise en correspondance ont différentes origines :

- La qualité radiométrique des images,

- La qualité géométrique des images (cartographie locale du plan focal, mouvements de la ligne visée, relief terrestre et effets de parallaxe),

- L'information radiométrique : contenu spectral, structure du voisinage du point caractéristique

Le mouvement de la ligne de visée a un impact distinct sur la performance de mise en correspondance suivant le mode d'acquisition des images.

Dans le cas du push-broom, la direction des colonnes est aussi une dimension temporelle. Or la mise en correspondance est effectuée sur une zone bi-dimensionnelle (vignette) au voisinage d'un point. Elle contient les mouvements de la ligne de visée pendant la durée de son acquisition. La corrélation opère comme un filtrage sur le signal que l'on cherche à mesurer. Ce problème n'existe pas dans le cas de détecteurs matriciels.

En ce qui concerne la mise en correspondance, les algorithmes envisageables comprennent la corrélation d'images, le filtrage, les approches par transformée de Fourier ou par décomposition en ondelettes.

En pratique il est préférable de disposer d'au moins une dizaine de points homologues pour chaque ligne image, suffisamment éloignés en colonne pour que les erreurs de mises en correspondance soient indépendantes.

Le calcul de la variation angulaire peut se faire pour chacune des lignes d'image, donc au même pas d'échantillonnage temporel que les lignes image. Chaque échantillon est donc affecté d'un bruit provenant de l'erreur de mise en correspondance des images qui est décorrélé.

*2. Estimation des variations angulaires*

La mise en correspondance entre les images permet d'obtenir un certain nombre de couples de points homologues, définis sur un critère essentiellement radiométrique. La modélisation géométrique du système permet d'obtenir une prédiction de ces points homologues. On peut utiliser pour cela des algorithme de type localisation / localisation inverse. Le résidu (différences entre le point prédit et le point corrélé) correspond aux erreurs de connaissance de ces paramètres, ainsi qu'aux approximations faites par le modèle. L'estimation des variations d'attitude exige de séparer ces contributions des autres postes (modèle instrument, parallaxe, etc...).

Le traitement peut être réalisé en chaque point homologue, ou globalement sur toute la largeur du champ.

La seconde solution a l'avantage d'une part, d'opérer un certain filtrage sur les mesures, et d'autre part, de tirer partie des invariants de l'image relatifs à la rigidité du plan focal et au fait que le mouvement du repère de visée est le même quelque soit le point du champ que l'on considère. Un calcul de type estimation par moindres carrés pourra être utilisé comme estimation instantanée de la variation d'attitude.

La mise en correspondance fournit les coordonnées pixel « absolues » des points dans une image, ainsi que les coordonnées des points homologues dans l'autre image. Cette correspondance est difficilement exploitable si l'on ne dispose pas de références.

Une référence peut être calculée par prédiction du point en utilisant la meilleure connaissance géométrique du système. Le résidu est alors l'écart entre les deux points. Il inclut l'ensemble des erreurs liées à cette connaissance, sauf les effets géométriques connus.

On peut chercher à restituer :

- l'orientation du repère de visée, ou
- la direction de visée en un ou plusieurs points du champ.

Le résidu est estimé par les formules (1) déjà mentionnées :

$$\mathrm{Res}\Theta_1/\Theta_2\,(M1(i_1, j_1)) = M_2.M'_2 = (di, dj) = (i'_2 - i_2, j'_2 - j_2)$$

avec $M_2(i_2,j_2) = \mathrm{Loc}^{-1}\Theta_2 \; o \; \mathrm{Loc}\Theta_1 \,(M1(i_1,j_1))$
$M'_2(i'_2,j'_2) = H\,(M1(i_1,j_1))$ point homologue fourni par corrélation d'image

Les effets liés à la méconnaissance de l'orientation absolue sont faibles (mais souvent non négligeables) par rapport aux effets liés au mouvement. Cette orientation absolue n'est pas directement observable, car ses effets se confondent avec ceux liés au mouvement. Par ailleurs, sur certains axes, la sensibilité est très faible. Il en résulte que l'on peut modéliser le résidu au premier ordre par les équations :

$$di = C_{\Delta T}(j).d\Delta T + C_{\Delta L}(j).d\Delta L + C_h(j).dh + Ei$$

$$dj = C_{\Delta R}(j).d\Delta R + Ej$$

qui constituent une simplification des équations (2) déjà mentionnées.

Une synchronisation temporelle est nécessaire.

Dans le cas d'acquisition par push-broom, les points acquis au même instant se trouvent sur la même ligne. En revanche, ce n'est pas forcément le cas de leurs homologues, par suite du non parallélisme des plans d'acquisition, des mouvements de rotation autours de l'axe de visée, des effets de projection géométrique. Il en résulte que l'intervalle entre deux acquisitions n'est pas rigoureusement constant le long de la ligne.

Le problème peut être évité dans le cas de l'utilisation de matrices de détection.

Si on dispose d'un ensemble de couples homologues tels que tous les points de l'image 1 sont acquis au même instant t, c'est à dire répartis le long de la ligne i, leurs points homologues ne sont pas forcément sur la même ligne de l'image 2 et ne sont pas acquis au même instant.

Soit $t+\tau'$, l'instant d'acquisition d'un des points dans l'image 2. On supposera que $\tau'$ est proche d'un intervalle de référence $\tau$.
On a alors :

$$dj(t, t+\tau') = dj(t, t+\tau) + dj(t+\tau, t+\tau') = C_{\Delta T}(j).d\Delta R(t, t+\tau) + C_{\Delta T}(j).d\Delta R(t+\tau, t+\tau') + Ej$$

Par linéarisation, on considère que $d\Delta R(t+\tau, t+\tau') \sim (\tau' - \tau).d(dR/dt)(t+\tau)$ Cette approximation est justifiée lorsque l'intervalle entre $\tau$ et $\tau'$ est court et la vitesse de rotation est quasiment constante et égale à celle de l'instant $t+\tau$.

$$dj(t, t+\tau') = C_{\Delta T}(j).d\Delta R(t, t+\tau) + C_{\Delta T}(j). (\tau' - \tau).d(dR/dt)(t+\tau) + Ej$$

Deux cas se présentent :

- dans un premier cas, les valeurs $\tau'$ pour tous les points homologues sont très proches ; alors $d(dR/dt)(t+\tau)$ n'est pas observable, en revanche, il est aisé de calculer $d\Delta R(t, t+\tau')$ comme la moyenne des $dj(t, t+\tau')/ C_{\Delta T}(j)$. Lorsque $\tau' \neq \tau$, si le filtre d'estimation fonctionne avec une valeur d'intervalle temporel constant égale à $\tau$, il est nécessaire d'effectuer une compensation. Comme on ne connaît pas $d(dR/dt)(t+\tau)$ puisqu'il s'agit de l'erreur sur la connaissance du mouvement, exprimé en vitesse, on l'approxime par $d\Delta R(t, t+\tau)/ \tau$. On obtient alors un modèle synchronisé pour le résidu défini par :

$$dj(t, t+\tau') = C_{\Delta T}(j).(\tau'/\tau).d\Delta R(t, t+\tau) + Ej + Ej_{sync}$$

où $Ej_{sync}$ est l'erreur faite lors de l'opération de synchronisation.
- dans un second cas, le système est inversible, et on peut réaliser l'estimation par une méthode de moindres carrés classique.

En ligne, le même raisonnement aboutit à la résolution de l'équation :

$$di(t, t+\tau') = \alpha(j).d\Delta T(t, t+\tau) + \alpha(j). (\tau' - \tau).d(dT/dt)(t+\tau) +$$

$$\beta(j).d\Delta L(t, t+\tau) + \beta(j). (\tau' - \tau).d(dL/dt)(t+\tau) + \gamma(j).dh + Ej$$

dans le cas d'un système inversible.

Dans le cas contraire, l'équation se réduit à :

$$di(t, t+\tau') = \alpha(j).\ (\tau'/\tau).d\Delta T(t, t+\tau) + \beta(j).\ (\tau'/\tau).d\Delta L(t, t+\tau) + \gamma(j).dh + Ej + Ej_{sync}$$

Les coefficients de sensibilité peuvent être calculés de manière numérique en chaque point du plan focal, et en chaque instant, en utilisant la meilleure connaissance du système dont on dispose. On calcule deux points homologues dans l'image 2 correspondant à un même point dans l'image 1, en faisant très légèrement varier un des paramètres.

$$\frac{\partial di}{\partial \theta}(M_1) \approx \frac{i'_2 - i_2}{d\theta}$$

$$\frac{\partial dj}{\partial \theta}(M_1) \approx \frac{j'_2 - j_2}{d\theta}$$

La parallaxe a un effet sensible essentiellement dans la direction des colonnes. Le système d'équations défini pour chaque point homologue peut être écrit sous la forme :

$$di = \alpha(j).d\Delta T + \beta(j).d\Delta L + \gamma(j).dh(j) + Ej$$

où h est la hauteur.

Il ne peut être résolu si, à chaque nouveau point homologue, la méconnaissance de son altitude est une nouvelle inconnue.
Dans la mesure où $\alpha(j)$ est quasiment constant, et où $\beta(j)$ est quasiment linéaire, on peut résoudre alors les équations simplifiées suivantes :

$$di = \alpha(j).d\Delta T + \beta(j).d\Delta L + Ej \ ,$$

ce qui revient à estimer l'altitude en chaque point, le long de la ligne, à une composante linéaire près qui correspond à une méconnaissance de la pente moyenne le long de la ligne :

$$dh_{est} = dh_{réel} + A_h + j.B_h$$

En faisant cette approximation, on suppose que cette pente moyenne est nulle, ce qui peut être considéré comme raisonnable si l'on dispose d'un minimum d'information sur le relief.
Il y a 2 paramètres à estimer en colonne et 4 en ligne. Or un couple de points homologues ne donne une information que sur deux dimensions. Il en résulte qu'il faut au moins 4 couples pour réaliser une estimation. Dans la pratique, on en utilisera davantage, ce qui permet de filtrer les erreurs de corrélation, en tenant cependant compte de l'augmentation du temps de calcul et dans la mesure où on dispose d'un nombre suffisant de points caractéristiques. Il est par ailleurs souhaitable qu'il y ait des points espacés dans le champ pour permettre une bonne estimation en lacet.

III - INTEGRATION ET FILTRAGE TEMPOREL

Deux approches sont possibles pour l'intégration et le filtrage temporel des mesures permettant d'aboutir à une restitution d'attitude fine.
La première consiste à affiner le profil d'attitude restitué de manière classique, dont on se donne un modèle d'erreur, par une estimation des paramètres de ce modèle d'erreur.
La seconde approche consiste à reprendre l'ensemble des mesures d'attitude valides, issues des différents capteurs, lorsqu'ils sont disponibles, et de refaire une estimation complète au sol, en y associant cette fois les mesures d'image. Quelle que soit l'approche, il s'agit d'un problème de traitement du signal pour lequel on dispose algorithmes tels que le filtrage de Wiener ou statistique, la méthode des moindres carrés, etc, ...).
On décrira maintenant des exemples.

**Filtrage de Wiener:**

La théorie de Wiener appliquée ici conduit au filtre d'estimation dont le gain est donné par la formule (3) déjà mentionnée.

$$F_k(\omega) = G(\omega).H_k(\omega) = \frac{2.(1 - \cos\omega\tau)}{2.(1 - \cos\omega\tau) + k} \qquad (3)$$

Un tel filtre conduit à une erreur sur l'estimation E($\omega$) essentiellement due à deux contributeurs : le bruit de mesure et le biais d'estimation introduit par le coefficient k.

Les résultats de l'analyse de l'effet du bruit montrent que le gain sur la performance de restitution en présence d'un bruit de mesure « blanc » ne dépend pas de l'intervalle $\tau$.

L'analyse de l'effet de k montre que la performance du filtre passe par un optimum pour une valeur de k donnée. Si k est trop faible, le bruit de mesure est trop fortement amplifié. Si k est trop fort, le signal à restituer est trop filtré. Théoriquement la valeur de k optimale vaut $1/RSB^2$, dans le cas de deux bruits blancs. Dans la pratique, les signaux (signal utile et signal d'erreur) sont beaucoup plus complexes qu'un simple bruit blanc. Si l'approche de Wiener est adoptée pour la restitution, le coefficient pourra être optimisé à partir de simulations.

Si le signal à restituer est un bruit « coloré » (blanc coupé à une fréquence fc ou $\omega_c$), la densité spectrale de puissance DSP est donnée par :

$$DSP_\Theta(\omega) = \sigma_\Theta^2 . (\omega_e/2\omega_c)^2 . \delta(\omega < \omega_c)$$

$$DSP_{Eest}(\omega) = |F_k(\omega) - 1|^2. DSP_\Theta(\omega)$$

$$\sigma_{Eest} = [\varphi_{Eest}(0)]^{1/2} = \sigma_\Theta.(\omega_e/2\omega_c) .[ \mathfrak{I}^{-1}[|F_k(\omega) - 1|^2. \delta(\omega < \omega_c)](0) ]^{1/2}$$

où $\omega_e$ est la fréquence d'échantillonnage, et $\delta(\omega < \omega_c)$ vaut 1 pour $\omega < \omega_c$, et est nul ailleurs. Le coefficient k optimal est de la forme :

$$k = a/RSB^2$$

Les basses fréquences présentent les problèmes des gyros que sont les dérives à longs termes : toute erreur de mesure à basse fréquence (biais ou lente variation), même faible, peut prendre des proportions importantes du fait de l'intégration.

Pour restaurer les basses fréquences, on peut utiliser des mesures de variation d'attitude sur une durée $\tau$ longue et diminuer le coefficient k du filtre. Cela ne peut se faire que si l'on diminue les bruits de mesure, en filtrant au delà d'une fréquence inférieure à la première coupure du filtre de Wiener ($1/\tau$).

Méthode des moindres carrés

La méthode des moindres carrés, en estimant les paramètres d'une modélisation polynomiale du signal, permet de mieux traiter les basses fréquences.

Il convient d'abord de formuler un estimateur basses fréquences par les moindres carrés

Si on modélise $\theta(t)$ au moyen d'un modèle polynomial, par exemple:

$$\theta(t) = \theta_0 + \theta_1.t + \ldots + \theta_n t^n + \varepsilon(t)$$

le signal à mesurer vaut :

$$\Delta\theta(t) = \theta_1.\tau + \theta_2.[(t+\tau)^2 - t^2] + \ldots + \theta_n.[(t+\tau)^n - t^n] + \Delta\varepsilon(t)$$

La composante continue n'est pas restituable.

Avec la formulation : $\Theta = (\theta_1, \theta_2, \ldots, \theta_n)$, et $\tau(t) = (\tau, [(t+\tau)^2 - t^2], \ldots, [(t+\tau)^n - t^n])$ Si on dispose de k1 mesures : $\Delta\theta_i = \Delta\theta_{mes}(t_i)$ pour i entre 1 et k1.

On a : $\Delta\theta_i = \tau(t_i)^T. \Theta + \Delta\varepsilon(t_i) + \varepsilon_{mes\,i}$

On désigne par la suite :

$$\Delta\Theta = (\Delta\theta_1, \Delta\theta_2, \ldots, \Delta\theta_k),$$

$$M_\tau = \text{matrice des k lignes } \tau(t_i)$$

$$B = (\Delta\varepsilon(t_1) + \varepsilon_{mes\,1}, \ldots, \Delta\varepsilon(t_k) + \varepsilon_{mes\,k})$$

L'équation de mesure s'écrit alors : $\Delta\Theta = M_\tau . \Theta + B$

La solution optimale, au sens des moindres carrés pondérés, est alors donnée par :

$$\Theta_{est} = (M_\tau{}^T.\Gamma_{mes}{}^{-1}.M_\tau)^{-1}. M_\tau{}^T. \Gamma_{mes}{}^{-1}. \Delta\Theta$$

où $\Gamma_{mes}$ est la matrice de covariance $E(B.B^T)$

On ne peut caractériser que l'erreur sur l'estimation de $\theta(t) - \theta_0$:

$$\sigma^2{}_{est}(t) = E[(\theta_{est}(t) - \theta(t)).(\theta_{est}(t) - \theta(t))^T] = T(t). \Gamma_{est} .T(t)^T$$

avec $T(t) = (t, t^2, \ldots, t^n)$

On caractérise ici une erreur relative, sachant qu'à l'instant d'origine t=0, donc $\sigma_{est}(t) = 0$, ce qui signifie que l'erreur à cet instant est entièrement reportée sur l'indétermination de $\theta_0$. Il en résulte que la notion d'erreur d'estimation ne s'appliquera que sur un intervalle temporel limité. On pourra alors considérer, comme critère dimensionnant, les valeurs statistiques de $\sigma_{est}(t)$ sur la durée de restitution (Maximum et moyenne).

Hypothèses pour une estimation de la performance :

• Les k mesures sont indépendantes, et ont un écart-type $\sigma_{mes}$.

• Les mesures sont régulièrement échantillonnées à un pas Te aux instant : $t_i = i. Te - t_0$

On a alors : $\Gamma_{mes} = \sigma^2{}_{mes}.I_d$ et $\Gamma_{est} = \sigma^2{}_{mes}.(M_\tau{}^T.M_\tau)^{-1}$

La performance est alors fournie par les valeurs statistiques (moyenne et valeur maximale) sur la durée de la prise de vue (ou du segment) du gain :

$$\sigma_{est}(t)/\sigma_{mes} = [T(t).(M_\tau{}^T.M_\tau)^{-1}.T(t)^T]^{1/2}$$

Un gain aux alentours de 1 permet d'obtenir une performance de restitution d'attitude similaire à la performance de mesure de variations angulaires initiales. On cherchera à garder ce gain systématiquement inférieur à 10, si on fait l'analogie entre l'erreur de corrélation des image (typiquement, 0,1 pixel) et l'erreur de restitution d'attitude admissible (typiquement 1 pixel).

L'erreur n'est pratiquement sensible qu'aux paramètres temporels, écart $\tau$, pas d'échantillonnage Te et horizon de restitution n.Te (n étant le nombre de mesures).

La variation du gain (rapport entre la précision de restitution et l'erreur de mesure en fonction de $\tau$ est indiquée sur la figure 14 pour :

- période d'échantillonnage ligne de 0,5 ms
- 1 mesure indépendante toutes les 10 lignes,
- Durée d'une prise de vue : 12000 lignes, soit, 6 s, ce qui met à disposition (1200 mesures)
- Estimation avec un polynôme à cinq coefficients

Les valeurs de gain montrées en figure 14 sont des valeurs moyennes et maximales de $\sigma_{est}$ (t)/$\sigma_{mes}$ pendant la durée d'observation de 6 s.

On constate une décroissance quasi linéaire du gain en fonction de $\tau$. En dessous de 10 ms environ, la performance devient médiocre. La remontée du gain pour les grandes valeurs de $\tau$ correspond au fait que les basses fréquences ne sont plus complètements représentées dans les mesures, donc que les estimations des coefficients polynômiaux d'ordre supérieur à 1 redeviennent mauvaises.

Par ailleurs, $\tau$ ne peut dépasser ni même se rapprocher de la durée d'observation, car il n'y a plus de mise en correspondance des images possible.

En conclusion les basses fréquences (autres que la composante continue) peuvent être restituées correctement selon un modèle polynomial avec :

- un nombre de mesures suffisant,

- un écart temporel entre images assez grand, typiquement entre 0.1 et 1 s

- un ordre du modèle polynomial relativement faible, en général ne dépassant pas 5.

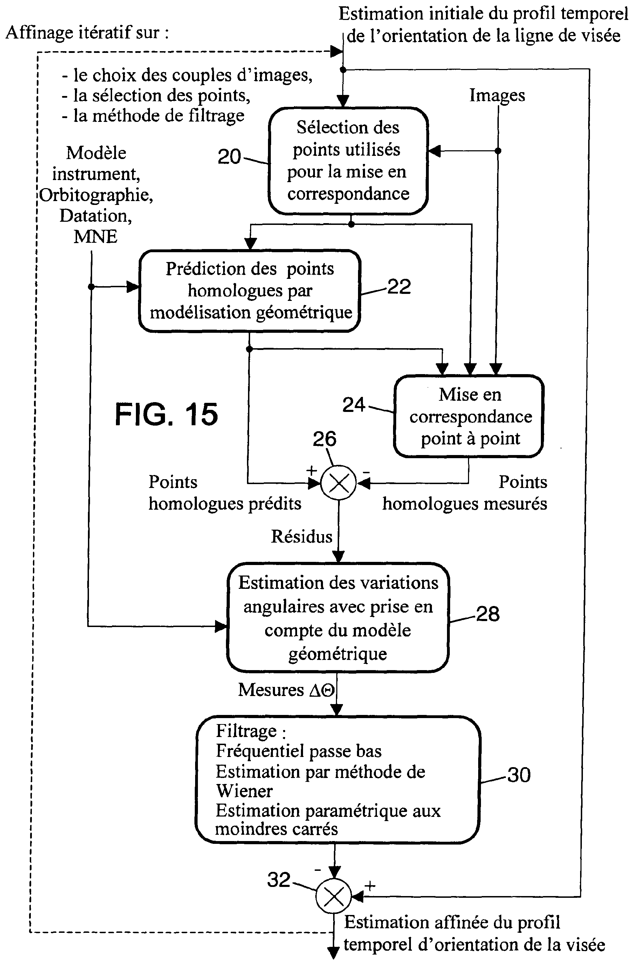

L'ensemble du traitement de restitution de l'orientation de la ligne de visée est représenté sur la figure 15, lorsque l'on utilise un processus itératif d'affinage de l'estimation qui permet de prendre en compte différents couples d'images, chaque couple pouvant être associé à un intervalle temporel $\tau$ spécifique.

L'étape 20 de sélection des points à corréler constitue le début d'itération. Elle peut comporter un mécanisme de rejet de points homologues faux (issus de l'itération précédente), pour accroitre la robustesse du traitement aux erreurs de mise en correspondance. Le processus est initialisé par une estimation initiale, constituée par la meilleure connaissance de l'orientation de visée dont on dispose. Cette connaissance peut être issue de mesures gyroscopiques, de mesures fournies par un capteur stellaire, de la consigne de prise de vue, ou de toute hybridation de ces informations.

La prédiction des points homologues d'une image par rapport à l'autre est réalisée à l'étape 22 par un algorithme de localisation / localisation inverse qui peut être celui décrit ci-dessus sous la rubrique « modèle de localisation dans l'image ». Cette prédiction prend en compte des indications mémorisées, telles que le modèle d'instrument, les caractéristiques d'orbite, un modèle numérique d'élévation du terrain observé.

La mise en correspondance des images point à point, à l'étape 24, est réalisée par tout type d'algorithme de mise en correspondance exploitant la ressemblance radiométrique entre image. L'initialisation de cette mise en correspondance, limitant la zone de recherche des points homologues, peut être fournie par la connaissance des points prédits en 22. La taille de la zone de recherche est alors déterminée par la précision du prédicteur.

Les résidus sont fournis par soustraction en 26. L'estimation des variations angulaires à partir des résidus est réalisée à l'étape 28 selon l'algorithme donné en II-2 « estimation des variations angulaires ».

Enfin, l'étape 30 d'intégration et de filtrage des mesures angulaires est réalisée selon les algorithmes présentés sous le titre II-3 « intégration et filtrage temporel ». Le traitement peut être précédé par un filtrage passe bas lorsque la fréquence d'échantillonnage des mesures est largement supérieure aux fréquences dans le mouvement de la ligne de visée, ce qui est souvent le cas. Un tel filtrage permet de lisser les mesures, et d'éliminer les bruits à haute fréquence qui sont du bruit de mesure. L'estimation affinée (et éventuellement l'orientation absolue) de la ligne de visée peut être restituée à partir de l'estimation initiale par un soustracteur 32, dont la sortie peut être rebouclée sur l'entrée du traitement.

Le procédé décrit ci-dessus trouve une application particulièrement avantageuse au calcul de l'orientation de la ligne de visée V d'un instrument optique 12 de prise de vue embarqué à bord d'un satellite 10, comme déjà décrit ci-dessus, en référence à la figure 1, pour un satellite 10 placé en orbite défilante, et muni d'un instrument 12 de visée au nadir, prenant des images de portions successives de la bande 16 du sol terrestre survolée et observée, grâce à un ensemble de détection situé au plan focal de l'instrument 12 et comprenant un détecteur matriciel à deux dimensions commandé de façon à prendre des paires d'images successives présentant un recouvrement notable.

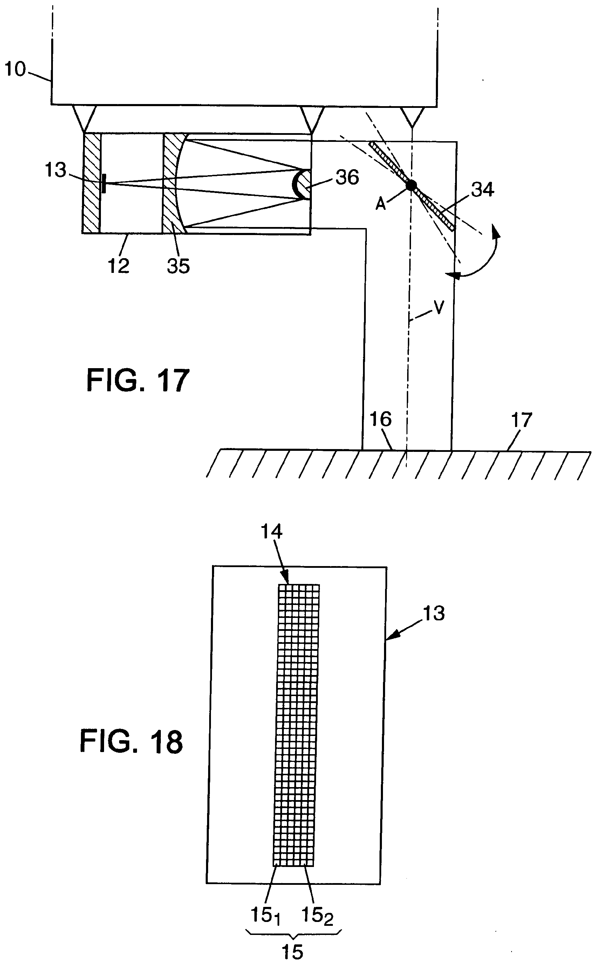

En variante, et comme représenté sur la figure 18, l'ensemble de détection au plan focal 13 peut comprendre un unique détecteur 14 de type barrette ayant typiquement de 1 (mais de préférence d'au moins 2) à quelques dizaines de lignes 15, qui comprennent chacune de 1000 à 10 000 pixels, par exemple, la barrette fonctionnant sur le principe dit « push-broom » et étant orientée dans le sens des lignes de l'image à obtenir, c'est-à-dire que la barrette 14 balaie la scène observée dans une direction perpendiculaire à ses lignes, le satellite 10 étant pointé de telle sorte que ce détecteur de type barrette 14 balaie la zone 16 à observer lors des prises de vue. Le procédé selon l'invention est alors appliqué aux paires d'images successives, comme défini ci-dessus, ou, en variante, ce procédé est appliqué à au moins deux images formées à partir d'au moins deux lignes, par exemple $15_1$ et $15_2$, du détecteur barrette 14 de la figure 18.

Dans ce dernier cas, le choix des au moins deux lignes $15_1$ et $15_2$ utilisées sur le détecteur barrette 14 pour former les au moins deux images est optimisé en vue de la reconstitution des mouvements de la ligne de visée V dans une bande de fréquence donnée.

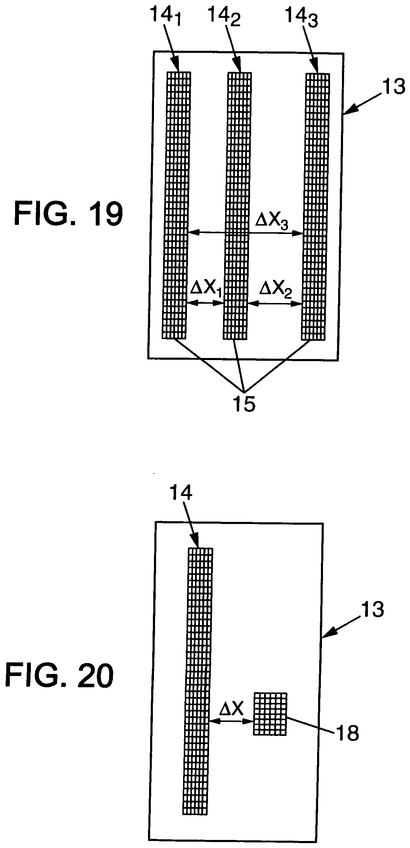

En variante, comme représenté sur la figure 19, l'ensemble de détection au plan focal 13 du satellite 10 en orbite défilante de la figure 1 peut comprendre plusieurs détecteurs principaux de type barrette, par exemple trois détecteurs barrettes $14_1$, $14_2$ et $14_3$ qui sont alignés, c'est-à-dire dont les lignes de pixels, à partir desquelles sont formées les images à traiter selon le procédé ci-dessus, sont parallèles les unes aux autres d'une barrette à l'autre, et donc aussi les colonnes, les détecteurs barrettes $14_1$, $14_2$ et $14_3$ étant écartés les uns des autres dans une direction perpendiculaire à leurs lignes par des écarts spatiaux $\Delta X_1$, entre les deux détecteurs $14_1$ et $14_2$, $\Delta X_2$, entre les deux détecteurs $14_2$ et $14_3$, et $\Delta X_3$ entre les deux détecteurs $14_1$ et $14_3$, de sorte à constituer trois paires de barrettes, dont les deux barrettes de chaque paire sont séparées l'une de l'autre d'une distance telle que $\Delta X_1$, $\Delta X_2$ ou $\Delta X_3$ de typiquement quelques fractions de mm à quelques mm dans le plan focal 13, de sorte qu'il résulte de ces écarts spatiaux des écarts temporels des prises d'image à traiter selon le procédé. Les détecteurs barrettes $14_1$, $14_2$ et $14_3$ observent ainsi approximativement la même portion de la scène, lors d'une prise de vue, avec un décalage temporel qui dépend directement de la distance $\Delta X_1$, $\Delta X_2$ ou $\Delta X_3$ entre les détecteurs barrettes 141, $14_2$ et $14_3$ dans le plan focal 13.

En outre, dans cette configuration de l'ensemble de détection, chaque ligne 15 des détecteurs barrettes $14_1$, $14_2$ et $14_3$ peut former une image de la scène, et au moins un sous-ensemble des images ainsi créées par l'ensemble des détecteurs du plan focal 13 peut être traité suivant le procédé de l'invention pour restituer l'orientation de la ligne de visée V de l'instrument optique 12.

Selon une alternative de réalisation, l'ensemble de détection au plan focal 13 de cet instrument 12 peut être constitué, comme schématiquement représenté sur la figure 20, d'un détecteur principal de type barrette 14, dont le nombre de lignes et le nombre de pixels par ligne sont appropriés à l'utilisation de ce détecteur 14 pour assurer la prise d'image suivant des caractéristiques désirées d'une mission, en terme par exemple de qualité d'image, de résolution et/ou de largeur de fauchée et ce détecteur principal 14 est associé, dans le plan focal 13, à des fins d'application du procédé selon l'invention et tel que défini ci-dessus, à au moins un détecteur dédié 18, de taille plus petite que le détecteur principal 14, et typiquement constitué d'une matrice de 100X100 pixels ou d'une barrette de 1000X10 pixels, et qui est placé à une certaine distance $\Delta X$ du détecteur principal 14, et aligné de sorte que les lignes et colonnes du détecteur dédié 18 soient respectivement parallèles aux lignes et colonnes du détecteur principal 14. A l'aide de ces deux détecteurs 14 et 18, séparés d'un écart spatial $\Delta X$ d'où résulte un écart temporel des prises d'image à traiter selon le procédé de l'invention, on peut reconstituer des mouvements de la ligne de visée V, et, dans l'exemple d'ensemble de détection au plan focal selon la figure 19 ou la figure 20, la séparation spatiale entre les détecteurs $14_1$, $14_2$ et $14_3$ ou 14 et 18, dans le plan focal 13, peut être optimisée en vue de la reconstitution des mouvements de la ligne de visée V dans une bande de fréquence donnée.

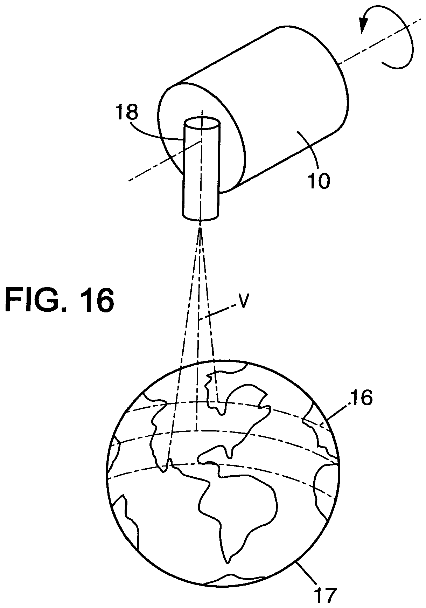

Le procédé de l'invention peut aussi être appliqué au calcul de l'orientation de la ligne de visée V d'un instrument optique 12 de prise de vue embarqué sur un satellite spinné 10, comme représenté schématiquement sur la figure 16, dont la stabilisation est assurée par la rotation sur lui-même, autour de l'axe de sa plate-forme cylindrique, de sorte que la ligne de visée V de l'instrument 12 est contrôlée d'une manière telle que l'ensemble de détection au plan focal 13 de l'instrument 12, et qui peut être un ensemble selon l'une ou l'autre des figures 18, 19 et 20, balaie une bande de surface 16 du globe terrestre 17 grâce à la rotation du satellite 10.

En variante, comme représenté sur la figure 17, le balayage d'une bande 16 de la surface du globe terrestre 17 par l'ensemble de détection au plan focal 13 de l'instrument optique 12 embarqué sur un satellite porteur 10 peut être assuré grâce au balayage d'un miroir 34 orientable, placé sur le chemin optique de l'instrument de prise de vue 12, le miroir de balayage 34 oscillant, autour d'un axe de pivot A fixe par rapport à la plate-forme du satellite 10, entre deux positions extrêmes repérées en pointillé, de sorte à réfléchir l'image de la bande de sol 16 sur un miroir concave 35 de l'instrument 12, ce miroir 35 réfléchissant cette image sur un miroir convexe 36 lui-même focalisant l'image sur l'ensemble de détection au point focal 13, où l'ensemble de détection peut être l'un ou l'autre des ensembles de détection des figures 18, 19 et 20, c'est-à-dire avec un unique détecteur de type barrette, avec plusieurs détecteurs de type barrette alignés en au moins une paire de barrettes spatialement écartées l'une de l'autre, et en une association d'un détecteur principal de type barrette avec un détecteur dédié spécialement écarté de ce dernier, et comme décrits ci-dessus.

Enfin, il est à noter que, dans les cas d'application du procédé de l'invention pour calculer et restituer l'orientation de la ligne de visée d'un instrument optique de prise de vue sur un satellite spinné (figure 16) ou un satellite porteur d'un miroir de balayage 34 de l'instrument optique 12 (figure 17), l'orbite du satellite peut être défilante ou géostationnaire.

**Revendications**

1. Procédé de restitution des mouvements d'une ligne de visée (V) en roulis, tangage et lacet d'un instrument d'observation (12) au cours d'acquisitions d'images d'une durée de typiquement quelques secondes par prise de vue, lesdits mouvements déformant chaque image dans une gamme des fréquences pouvant aller jusqu'à des hautes fréquences de quelques centaines de Hertz, suivant lequel, à partir de l'instrument (12) monté sur un porteur (10) en déplacement, on forme, pendant la durée [Ti, Tf] de prise de vue, au moins deux images (14a, 14b) contenant une même portion d'une scène, les prises de ces deux images étant décalées dans le temps d'une valeur connue T sensiblement constante, et on détermine lesdits mouvements de la ligne de visée (V) de l'instrument (12) au cours de la prise de vue par au moins les étapes suivantes :

   a) une étape de sélection et de mise en correspondance de plusieurs zones caractéristiques homologues ; chaque zone caractéristique étant une portion de scène de quelques centaines de pixels qui contient des informations radiométriques, géométriques ou texturales, lesdites zones caractéristiques étant prises au voisinage d'instants respectivement $Tn$ et $Tn + T$ ($n= 1$ à $N$) répartis entre $Ti$ et $Tf$ dans lesdites images de la même portion de la scène de façon à obtenir une mesure de la position aux instants respectivement $Tn$ et $Tn+T$ ($n=1$ à $N$) desdites zones homologues, ou d'au moins un point particulier de ces zones, dans chacune des deux images de ladite portion,
   b) une étape de calcul des variations angulaires de la ligne de visée (V) de l'instrument (12) entre les instants $Tn$ et $Tn+T$ ($n=1$ à $N$) par recalage d'un modèle de mise en correspondance des images, ledit modèle donnant pour tout point d'une première image prise à l'instant $Tn$ ($n=1$ à $N$), une estimation de la position de son point homologue dans une seconde image prise à l'instant $Tn+T$ en fonction de paramètres comprenant en particulier l'orientation de la ligne de visée (V) de l'instrument (12) à l'instant $Tn$ et lesdites variations angulaires de cette ligne de visée (V) entre $Tn$ et $Tn + T$ ; le recalage du modèle consistant à calculer les valeurs desdites variations angulaires qui minimisent une fonction, par exemple quadratique, des écarts entre la position des zones homologues de la seconde image prédites par le modèle, et la position desdites zones homologues de la seconde image telle que restituée à l'étape (a), et
   c) une étape de reconstitution des mouvements de la ligne de visée (V) sur l'horizon de temps [Ti, Tf] par intégration, filtrage et éventuellement ré-échantillonnage de l'ensemble des variations élémentaires reconstituées à l'étape (b).

2. Procédé suivant la revendication 1, **caractérisé en ce que** l'étape (a) met en oeuvre une mise en correspondance de zones caractéristiques d'images fondée sur une ressemblance géométrique, radiométrique ou texturale entre au moins deux images acquises lors de la prise de vue.

3. Procédé suivant l'une des revendications 1 et 2, **caractérisé en ce que** l'une au moins des méthodes suivantes est utilisée pour sélectionner les zones caractéristiques associées à une date de prise de vue $Tn$ donnée :

   - sélection des points à double gradient supérieur à un seuil donné dans une zone de l'image correspondant à la prise de vue effectuée au voisinage de l'instant $Tn$ ;
   - sélection de points ayant des positions pré-déterminées indépendamment du contenu de l'image au voisinage de ces points, avec rejet éventuel des points pour lesquels un critère de qualité de mise en correspondance est inférieur à un seuil donné ;
   - sélection de points pré-déterminés donnée par une connaissance a priori d'éléments particuliers présents dans la scène ;
   - sélection d'un sous-ensemble de points à partir d'un ensemble de points caractéristiques calculés par l'une des méthodes ci-dessus ou similaire, de telle sorte à maximiser la répartition spatiale desdits points, et la qualité de la mise en correspondance des zones caractéristiques au voisinage de ces points ;
   - sélection d'une vignette de typiquement quelques dizaines à quelques centaines de pixels au voisinage des points afin d'améliorer la qualité de la mise en correspondance.

4. Procédé suivant l'une des revendications 1 à 3, **caractérisé en ce que** les images mises en correspondance sont prises dans des bandes spectrales pouvant être identiques ou différentes.

5. Procédé suivant l'une quelconque des revendications précédentes, **caractérisé en ce que**, dans l'étape (b), lesdits écarts intervenant dans le critère quadratique à minimiser sont pondérés par un scalaire positif proportionnel à la qualité estimée de ladite mise en correspondance desdites zones caractéristiques entre les deux images, l'estimation de ladite qualité de mise en correspondance étant calculée suivant les méthodes de l'état de l'art (calcul de corrélation par exemple).

6. Procédé suivant l'une quelconque des revendications précédentes, **caractérisé en ce que**, au cours de l'étape (c), on effectue une intégration, un filtrage et éventuellement un ré-échantillonnage des estimées de variation d'attitude issues de l'étape (b) pour reconstituer les mouvements de la ligne de visée de l'instrument, hors composante absolue de l'orientation de la visée, sur l'intervalle de temps [Ti, Tf] par l'une au moins des méthodes suivantes :

   - en utilisant un filtrage inverse, permettant de rehausser certaines fréquences atténuées tout en limitant l'impact du bruit, par exemple un filtre de Wiener ou de Kalman,
   - par ajustement d'un modèle analytique, par exemple estimation des coefficients d'un polynôme de degré ne dépassant pas 5 en général selon une méthode des moindres carrés.

7. Procédé suivant l'une quelconque des revendications précédentes, **caractérisé en ce que**, en l'absence de mise en correspondance de qualité suffisante des zones caractéristiques sélectionnées à l'instant Tn, on calcule avantageusement l'orientation de la ligne de visée à l'instant Tn par une interpolation des orientations de ligne de visée reconstituées par l'application du procédé à des instants antérieurs et postérieurs à Tn.

8. Procédé suivant la revendication 6 ou 7, **caractérisé en ce qu'**on utilise la connaissance a priori du contenu fréquentiel des variations de l'orientation de la ligne de visée pour effectuer préalablement à l'étape (c) un filtrage ne retenant que les fréquences concernées.

9. Procédé suivant l'une quelconque des revendications précédentes, **caractérisé en ce que** l'on utilise un nombre d'images d'une même scène supérieur strictement à deux, on applique le procédé à plusieurs couples d'images et on hybride les résultats obtenus à partir des différents couples d'images de la même scène en mettant en oeuvre un affinage global ou itératif de la connaissance courante de l'orientation de la ligne de visée lors de la prise de vue.

10. Procédé suivant la revendication 9, **caractérisé en ce que** l'on applique le procédé à un premier couple d'images avantageusement parmi les couples d'images supposées être les mieux corrélées, par exemple celles prises dans une même bande spectrale, afin d'obtenir une première reconstitution des mouvements de la ligne de visée de l'instrument au cours de la prise de vue, puis on traite un autre couple d'images en initialisant le modèle de mise en correspondance à partir des valeurs de l'orientation de la ligne de visée calculées à l'étape précédente, et ainsi de suite jusqu'à épuisement des données ou obtention de la convergence.

11. Procédé suivant la revendication 10, **caractérisé en ce que** l'instrument permet de former au moins trois images décalées dans le temps, au moins deux des images présentant une forte corrélation entre elles, et au moins une autre image faiblement corrélée avec les deux autres, et que l'on corrige les mouvements de ligne de visée sur au moins une image faiblement corrélée avec les deux autres grâce à la reconstitution desdits mouvements de la ligne de visée effectuée en appliquant le procédé sur au moins un couple d'images présentant une forte corrélation entre elles.

12. Procédé suivant l'une quelconque des revendications précédentes, **caractérisé en ce que** l'on initialise le modèle de mise en correspondance avec une connaissance a priori de l'orientation de la ligne de visée au cours de la prise de vue, ladite connaissance a priori étant issue d'une consigne d'orientation ou d'une mesure dérivée de senseurs d'attitudes tels que capteurs stellaires, gyromètres, ou d'une connaissance de la position absolue à la surface du globe terrestre de zones caractéristiques reconnaissables dans l'image, ou d'une hybridation de telles connaissances.

13. Procédé suivant l'une quelconque des revendications précédentes, **caractérisé en ce que** l'on tient compte des effets de parallaxe dans le modèle de mise en correspondance, en utilisant une connaissance a priori du relief des scènes observées.

14. Procédé suivant l'une quelconque des revendications précédentes, dans lequel les images sont obtenues par un détecteur fonctionnant selon le principe dit par push-broom.

15. Application du procédé selon l'une quelconque des revendications 1 à 14 au calcul de l'orientation de la ligne de visée (V) d'un instrument optique (12) de prise de vue embarqué à bord d'un satellite (10), **caractérisée en ce que** :

   - ledit instrument (12) comprend dans son plan focal (13) au moins un détecteur de type barrette (14) de typiquement 1 à quelques dizaines de lignes (15) et comprenant chacune quelques 1,000 à 10,000 pixels,
- ledit satellite (10) est placé sur une orbite défilante,
- le satellite (10) est pointé de telle sorte que ledit au moins un détecteur de type barrette (14) balaie la zone (16) à observer lors des prises de vue, et
- on applique le procédé selon l'une des revendications 1 à 13 pour estimer l'orientation de la ligne de visée (V) de l'instrument (12) au cours d'une prise de vue.

16. Application du procédé selon l'une quelconque des revendications 1 à 14 au calcul de l'orientation de la ligne de visée (V) d'un instrument optique (12) de prise de vue embarqué à bord d'un satellite (10), **caractérisée en ce que** :

- ledit instrument (12) comporte dans son plan focal (13) au moins un détecteur de type barrette (14),
- la ligne de visée (V) de l'instrument (12) est contrôlée de sorte que ledit au moins un détecteur (14) balaie la surface (16) du globe terrestre (17), soit par la rotation du satellite (10), soit grâce au balayage d'un miroir orientable (34) placé sur le chemin optique de l'instrument (12), et
- on applique le procédé selon l'une des revendications 1 à 13 pour estimer l'orientation de la ligne de visée (V) de l'instrument (12) au cours d'une prise de vue.

17. Application du procédé selon la revendication 16, **caractérisée en ce que** l'orbite du satellite (10) est géostationnaire.

18. Application du procédé selon l'une quelconque des revendications 15 à 17, **caractérisée en ce que**

- ledit instrument (12) comprend dans son plan focal (13) au moins deux détecteurs de type barrette, les barrettes étant alignées de sorte que leurs lignes et colonnes soient respectivement sensiblement parallèles, et les deux barrettes de chaque paire de barrettes, dont au moins une paire est ainsi dans le plan focal (13), étant séparées l'une de l'autre d'une distance de typiquement quelques fractions de mm à quelques mm dans le plan focal (13), les détecteurs observant ainsi approximativement la même portion de la scène lors d'une prise de vue, avec un décalage temporel dépendant directement de la distance entre les détecteurs au plan focal (13).

19. Application du procédé selon l'une des revendications 15 à 18, **caractérisée en ce que** chaque ligne (15) des détecteurs du plan focal forme une image de la scène, et qu'un sous-ensemble des images ainsi créées par l'ensemble des détecteurs du plan focal (13) peut être traité suivant le procédé pour restituer l'orientation de la ligne de visée (V) de l'instrument (12).

20. Application du procédé selon l'une quelconque des revendications 15 à 17, **caractérisée en ce que** :

- l'instrument (12) comporte au moins un détecteur principal de type barrette (14) dans son plan focal (13), ce détecteur (14) étant utilisé pour assurer la prise d'image suivant des caractéristiques de mission désirées (largeur de fauchée, résolution, qualité image, etc.),
- on ajoute dans le plan focal à des fins d'application du procédé selon l'une des revendications 1 à 13, au moins un détecteur dédié (18), de taille plus petite, typiquement une matrice de 100x100 pixels, ou une barrette de 1000x10 pixels, et on place ledit détecteur dédié (18) à une certaine distance dudit détecteur principal (14), et
- on applique le procédé selon l'une des revendications 1 à 14.

21. Application du procédé selon l'une quelconque des revendications 18 à 20, **caractérisée en ce que** la séparation des détecteurs dans le plan focal (13) est optimisée en vue de la reconstitution des mouvements de la ligne (V) de visée dans une bande de fréquence donnée.

22. Application du procédé selon l'une quelconque des revendications 15 à 17, **caractérisée en ce qu'**il n'y a qu'un seul détecteur (14) au plan focal (13) balayant la scène, et que le procédé est appliqué à au moins deux images (14a, 14b) formées à partir d'au moins deux lignes (15) du détecteur (14).

23. Application du procédé selon la revendication 22 **caractérisée en ce que** le choix des au moins deux lignes ($15_1$, $15_2$), du détecteur (14) utilisées pour former les au moins deux images est optimisé en vue de la reconstitution des mouvements de la ligne de visée (V) dans une bande de fréquence donnée.

**Patentansprüche**

1. Verfahren zur Rekonstruktion von Roll-, Nick- und Gierbewegungen einer Visierlinie (V) eines Beobachtungsinstruments (12) im Verlaufe von Bilderfassungen einer Dauer von typisch einigen Sekunden pro Aufnahme, wobei die Bewegungen jedes Bild in einem Frequenzbereich verformen, der bis zu hohen Frequenzen von einigen hundert Hertz reichen kann,
wobei gemäß dem Verfahren ausgehend von dem an einem verschiebbaren Träger (10) angebrachten Instrument (12) während der Aufnahmezeitdauer [Ti, Tf] mindestens zwei Bilder (14a, 14b), die einen gleichen Abschnitt einer Szene enthalten, erzeugt werden, wobei die Aufnahmen dieser zwei Bilder um einen bekannten Wert T, der im Wesentlichen konstant ist, zeitlich versetzt sind, und die Bewegungen der Visierlinie (V) des Instruments (12) im Verlaufe der Aufnahme durch mindestens die folgenden Schritte bestimmt werden:

   a) einen Schritt der Auswahl und Korrespondenzsetzung mehrerer charakteristischer homologer Zonen; wobei jede charakteristische Zone ein Szenenabschnitt von einigen hundert Pixeln ist, der radiometrische, geometrische oder strukturelle Informationen enthält, wobei die charakteristischen Zonen jeweils in der Nähe von Zeitpunkten $Tn$ und $Tn + T$ ($n = 1$ bis $N$) aufgenommen sind, die zwischen Ti und Tf in den Bildern des gleichen Abschnitts der Szene verteilt sind, um in jedem der zwei Bilder des Abschnitts eine Messung der Position der homologen Zonen oder mindestens eines speziellen Punkts dieser Zonen an den jeweiligen Zeitpunkten $Tn$ und $Tn + T$ ($n = 1$ bis $N$) zu gewinnen,

   b) einen Schritt der Berechnung von Winkeländerungen der Visierlinie (V) des Instruments (12) zwischen den Zeitpunkten $Tn$ und $Tn + T$ ($n = 1$ bis $N$) durch Nachjustierung eines Modells der Korrespondenzsetzung der Bilder, wobei das Modell für jeden Punkt eines zum Zeitpunkt $Tn$ ($n = 1$ bis $N$) aufgenommenen ersten Bilds eine Schätzung der Position seines homologen Punkts in einem zum Zeitpunkt $Tn + T$ aufgenommenen zweiten Bild als Funktion von Parametern liefert, die insbesondere die Orientierung der Visierlinie (V) des Instruments (12) zum Zeitpunkt $Tn$ und die Winkeländerungen dieser Visierlinie (V) zwischen $Tn$ und $Tn + T$ aufweisen; wobei die Nachjustierung des Modells darin besteht, die Werte der Winkeländerungen zu berechnen, die eine beispielsweise quadratische Funktion der Abstände zwischen der von dem Modell vorhergesagten Position der homologen Zonen des zweiten Bilds und der in Schritt (a) rekonstruierten Position der homologen Zonen des zweiten Bilds minimieren, und

   c) einen Schritt der Rekonstruktion der Bewegungen der Visierlinie (V) über den Zeithorizont [Ti, Tf] durch Integration, Filterung und gegebenenfalls erneutes Sampling der Gesamtheit der in Schritt (b) rekonstruierten elementaren Veränderungen.

2. Verfahren nach Anspruch 1, **dadurch gekennzeichnet, dass** der Schritt (a) eine Korrespondenzsetzung von charakteristischen Bildzonen auf Basis einer geometrischen, radiometrischen oder strukturellen Ähnlichkeit zwischen mindestens zwei bei der Aufnahme erfassten Bildern durchführt.

3. Verfahren nach einem der Ansprüche 1 und 2, **dadurch gekennzeichnet, dass** mindestens eine der folgenden Methoden verwendet wird, um die charakteristischen Zonen, die mit einem gegebenen Aufnahmedatum $Tn$ verknüpft sind, auszuwählen:

   - Auswahl von Punkten, deren doppelter Gradient größer als eine gegebene Schwelle ist, in einer Zone des Bilds, die einer nahe am Zeitpunkt $Tn$ gemachten Aufnahme entspricht;
   - Auswahl von Punkten, die vorgegebene Positionen haben, unabhängig des Inhalts des Bilds in der Nachbarschaft dieser Punkte, gegebenenfalls mit Zurückweisen von Punkten, für welche ein Korrespondenzsetzung-Qualitätskriterium kleiner als eine gegebene Schwelle ist;
   - Auswahl von vorab festgelegten Punkten, die durch eine a priori Kenntnis von in der Szene vorhandenen, besonderen Elementen gegeben ist;
   - Auswahl einer Untergruppe von Punkten aus einer Gruppe von charakteristischen Punkten, die mit einem der obigen Verfahren oder ähnlichen berechnet werden, derart, um die räumliche Verteilung der Punkte und die Qualität der Korrespondenzsetzung der charakteristischen Zonen in der Nachbarschaft dieser Punkte zu maximieren;
   - Auswahl eines Felds von typisch einigen zehn bis einigen hundert Pixeln in der Nachbarschaft der Punkte, um die Qualität der Korrespondenzsetzung zu verbessern.

4. Verfahren nach einem der Ansprüche 1 bis 3, **dadurch gekennzeichnet, dass** die in Korrespondenz gesetzten Bilder in Spektralbändern aufgenommen sind, die gleich oder unterschiedlich sein können.

5. Verfahren nach einem der vorstehenden Ansprüche, **dadurch gekennzeichnet, dass** im Schritt (b) die Abstände, die in dem zu minimierenden quadratischen Kriterium auftreten, mit einem positiven skalaren Wert, der proportional zur geschätzten Qualität der Korrespondenzsetzung der charakteristischen Zonen in den zwei Bildern ist, gewichtet werden, wobei die Schätzung der Qualität der Korrespondenzsetzung gemäß den Verfahren des Stands der Technik (zum Beispiel Korrelationsberechnung) berechnet wird.

6. Verfahren nach einem der vorstehenden Ansprüche, **dadurch gekennzeichnet, dass** im Verlaufe des Schritts (c) eine Integration, eine Filterung und gegebenenfalls ein erneutes Sampling der im Schritt (b) ausgegebenen Schätzungen der Fluglageänderung durchgeführt werden, um die Bewegungen der Visierlinie des Instruments, außer Absolutkomponente der Orientierung der Visier, in dem Zeitintervall [Ti, Tf] mit Hilfe mindestens eines der folgenden Verfahren zu rekonstruieren:

   - durch Verwenden einer inversen Filterung, die erlaubt, gewisse abgeschwächte Frequenzen zu verstärken und zugleich den Einfluss des Rauschens zu begrenzen, zum Beispiel ein Wiener- oder Kaiman-Filter,
   - durch Anpassen eines analytischen Modells, zum Beispiel Schätzung der Koeffizienten eines Polynoms, dessen Grad im Allgemeinen 5 nicht überschreitet, gemäß einem Verfahren der kleinsten Quadrate.

7. Verfahren nach einem der vorstehenden Ansprüche, **dadurch gekennzeichnet, dass** bei Abwesenheit einer qualitativ ausreichenden Korrespondenz der gewählten charakteristischen Zonen zum Zeitpunkt Tn die Orientierung der Visierlinie zum Zeitpunkt Tn vorteilhaft berechnet wird mittels einer Interpolation der durch Anwendung des Verfahrens rekonstruierten Orientierungen der Visierlinie zu Zeitpunkten vor und nach Tn.

8. Verfahren nach Anspruch 6 oder 7, **dadurch gekennzeichnet, dass** die a priori Kenntnis des Frequenzinhalts der Änderungen der Orientierung der Visierlinie verwendet wird, um vor dem Schritt (c) eine Filterung durchzuführen, die nur die betreffenden Frequenzen zurückhält.

9. Verfahren nach einem der vorstehenden Ansprüche, **dadurch gekennzeichnet, dass** eine Anzahl von Bildern derselben Szene größer gleich zwei verwendet wird, das Verfahren auf mehrere Bildpaare angewendet wird und die mit unterschiedlichen Bildpaaren derselben Szene gewonnenen Ergebnisse kombiniert werden, indem eine allgemeine oder iterative Verfeinerung der laufenden Kenntnis der Orientierung der Visierlinie bei der Aufnahme durchgeführt wird.

10. Verfahren nach Anspruch 9, **dadurch gekennzeichnet, dass** das Verfahren auf ein erstes Bildpaar, vorteilhaft eines von Bildpaaren, von denen vermutet wird, dass sie die am besten korrelierten sind, zum Beispiel die in einem gleichen Spektralband aufgenommenen, angewendet wird, um eine erste Rekonstruktion der Bewegungen der Visierlinie des Instruments während der Aufnahme zu gewinnen, dann ein anderes Bildpaar behandelt wird, indem das Korrespondenzmodell mit den im vorausgehenden Schritt berechneten Werten der Orientierung der Visierlinie initialisiert wird, und so fort, bis alle Daten ausgeschöpft sind oder Konvergenz erreicht ist.

11. Verfahren nach Anspruch 10, **dadurch gekennzeichnet, dass** das Instrument erlaubt, mindestens drei zeitlich versetzte Bilder zu erzeugen, wobei mindestens zwei der Bilder eine starke Korrelation untereinander haben und mindestens ein anderes Bild schwach mit den zwei anderen korreliert ist, und dadurch, dass die Bewegungen der Visierlinie auf mindestens einem schwach mit den zwei anderen korrelierten Bild korrigiert werden mit Hilfe der Rekonstruktion der Bewegungen der Visierlinie, die sich ergibt durch Anwenden des Verfahrens auf mindestens ein Bildpaar, das eine starke Korrelation untereinander hat.

12. Verfahren nach einem der vorstehenden Ansprüche, **dadurch gekennzeichnet, dass** das Modell der Korrespondenzsetzung initialisiert wird mit einer a priori Kenntnis der Orientierung der Visierlinie während der Aufnahme, wobei die a priori Kenntnis resultiert aus: einem Orientierungseinstellwert oder einer Messung, die von Lagesensoren wie Sterndetektoren und Gyrometern stammt, oder einer Kenntnis der absoluten Position von in dem Bild erkennbaren charakteristischen Zonen auf der Erdoberfläche oder einer Kombination dieser Kenntnisse.

13. Verfahren nach einem der vorstehenden Ansprüche, **dadurch gekennzeichnet, dass** in dem Modell der Korrespondenzsetzung Parallaxeneffekte berücksichtigt werden, indem eine a priori Kenntnis des Reliefs der beobachteten Szenen verwendet wird.

14. Verfahren nach einem der vorstehenden Ansprüche, in welchem die Bilder mit Hilfe eines Detektors gewonnen werden, der nach dem sogenannten "push-broom"-Prinzip arbeitet.

**15.** Anwendung des Verfahrens nach einem der Ansprüche 1 bis 14 auf die Berechnung der Orientierung der Visierlinie (V) eines optischen Bildaufnahmeinstruments (12), das sich an Bord eines Satelliten (10) befindet, **dadurch gekennzeichnet, dass**

- das Instrument (12) in seiner Fokalebene (13) mindestens einen Detektor des Streifentyps (14) aufweist, der typisch eine bis einige zehn Linien (15) mit jeweils einigen 1000 bis 10000 Pixeln aufweist,
- der Satellit (10) in einer vorbeiziehenden Umlaufbahn ist,
- der Satellit (10) derart ausgerichtet ist, dass der mindestens eine Detektor des Streifentyps (14) die zu beobachtende Zone (14) bei den Bildaufnahmen abtastet, und
- das Verfahren nach einem der Ansprüche 1 bis 13 angewendet wird zur Schätzung der Orientierung der Visierlinie (V) des Instruments (12) während einer Aufnahme.

**16.** Anwendung des Verfahrens nach einem der Ansprüche 1 bis 14 auf die Berechnung der Orientierung der Visierlinie (V) eines optischen Bildaufnahmeinstruments (12), das sich an Bord eines Satelliten (10) befindet, **dadurch gekennzeichnet, dass**

- das Instrument (12) in seiner Fokalebene (13) mindestens einen Detektor des Streifentyps (14) aufweist,
- die Visierlinie (V) des Instruments (12) derart gesteuert wird, dass der mindestens eine Detektor (14) die Oberfläche (16) des Erdballs (17) abtastet, sei es durch die Rotation des Satelliten (10), sei es durch das Abtasten eines auf dem optischen Pfad des Instruments (12) angeordneten orientierbaren Spiegels, und
- das Verfahren nach einem der Ansprüche 1 bis 13 angewendet wird zur Schätzung der Orientierung der Visierlinie (V) des Instruments (12) während einer Aufnahme.

**17.** Anwendung des Verfahrens nach Anspruch 16, **dadurch gekennzeichnet, dass** die Umlaufbahn des Satelliten (10) geostationär ist.

**18.** Anwendung des Verfahrens nach einem der Ansprüche 15 bis 17, **dadurch gekennzeichnet, dass**

- das Instrument (12) in seiner Fokalebene (13) mindestens zwei Detektoren des Streifentyps aufweist, wobei die Streifen derart ausgerichtet sind, dass ihre Zeilen und Spalten im Wesentlichen zueinander parallel sind, und wobei zwei Streifen jedes Streifenpaars, von denen mindestens ein Paar in der Fokalebene ist, in einem Abstand von typisch einigen Bruchteilen von mm bis einigen mm voneinander in der Fokalebene (13) angeordnet sind, wodurch die Detektoren bei einer Aufnahme ungefähr den gleichen Abschnitt der Szene beobachten, mit einem zeitlichen Versatz, der direkt von dem Abstand zwischen den Detektoren in der Fokalebene (13) abhängt.

**19.** Anwendung des Verfahrens nach einem der Ansprüche 15 bis 18, **dadurch gekennzeichnet, dass** jede Zeile (15) der Detektoren der Fokalebene ein Bild der Szene erzeugt und dass eine Teilmenge der auf diese Weise von allen Detektoren der Fokalebene (13) erzeugten Bilder gemäß dem Verfahren behandelt werden kann, um die Orientierung der Visierlinie (V) des Instruments (12) zu rekonstruieren.

**20.** Anwendung des Verfahrens nach einem der Ansprüche 15 bis 17, **dadurch gekennzeichnet, dass**

- das Instrument (12) in seiner Fokalebene (13) einen Hauptdetektor des Streifentyps (14) aufweist, wobei dieser Detektor (14) verwendet wird, um die Bildaufnahme gemäß den gewünschten Merkmalen der Mission (Schwadbreite, Auflösung, Bildqualität usw.) sicherzustellen,
- für Anwendungszwecke des Verfahrens nach einem der Ansprüche 1 bis 13 mindestens ein kleinerer Spezialdetektor (18), typisch eine Matrix von 100x100 Pixeln oder ein Streifen von 1000x10 Pixeln, in der Fokalebene hinzugefügt wird und der Spezialdetektor (18) in einem gewissen Abstand von dem Hauptdetektor (14) angeordnet wird, und
- das Verfahren nach einem der Ansprüche 1 bis 14 angewendet wird.

**21.** Anwendung des Verfahrens nach einem der Ansprüche 18 bis 20, **dadurch gekennzeichnet, dass** der Abstand der Detektoren in der Fokalebene (13) unter dem Gesichtspunkt, die Bewegungen der Visierlinie (V) in einem gegebenen Frequenzband zu rekonstruieren, optimiert wird.

**22.** Anwendung des Verfahrens nach einem der Ansprüche 15 bis 17, **dadurch gekennzeichnet, dass** es nur einen einzigen die Szene abtastenden Detektor (14) in der Fokalebene (13) gibt und dass das Verfahren auf mindestens zwei Bilder (14a, 14b) angewendet wird, die ausgehend von mindestens zwei Zeilen (15) des Detektors (14) erzeugt werden.

**23.** Anwendung des Verfahrens nach Anspruch 22, **dadurch gekennzeichnet, dass** die Auswahl der mindestens zwei Zeilen ($15_1$, $15_2$) des Detektors (14), die zum Erzeugen der mindestens zwei Bilder verwendet werden, unter dem Gesichtspunkt, die Bewegungen der Visierlinie (V) in einem gegebenen Frequenzband zu rekonstruieren, optimiert wird.

**Claims**

**1.** Method of restoring the movements of a line of sight (V) in terms of roll, pitch and yaw of an observation instrument (12) during a picture shot of a duration of typically a few seconds per shot, said movements distorting each image in a frequency range up to high frequencies of a few hundred Hertz, according to which at least two images (14a, 14b) containing the same portion of a scene are formed, over the picture-shooting duration [Ti, Tf] on the basis of the instrument (12) mounted on a moving carrier (10), the shots of these two images being offset in time by a substantially constant known value T and the said movements of the line of sight (V) of the instrument (12) in the course of the picture shot are determined by at least the following steps:

a) a step of selecting and matching several homologous characteristic zones, each characteristic area being a portion of a scene of a few hundred pixels which contains radiometric, geometric or textural information, said characteristics areas being shot in the vicinity of instants respectively Tn and Tn + T (n=1 to N) distributed between Ti and Tf in the said images of the same portion of the scene so as to obtain a measurement of the position at the instants respectively Tn and Tn+T (n=1 to N) of the said homologous zones, or of at least a particular point of these zones, in each of the two images of the said portion,

b) a step of calculating the angular variations of the line of sight (V) of the instrument (12) between the instants Tn and Tn+T (n=1 to N) by adjusting an image matching model, the said model giving for any point of a first image shot at the instant Tn (n=1 to N), an estimate of the position of its homologous point in a second image shot at the instant Tn+T as a function of parameters comprising in particular the orientation of the line of sight (V) of the instrument (12) at the instant Tn and the said angular variations of this line of sight (V) between Tn and Tn + T; the adjustment of the model consisting in calculating the values of the said angular variations which minimize a function, for example a quadratic function, of the deviations between the position of the homologous zones of the second image that are predicted by the model, and the position of the said homologous zones of the second image as it is restored in step (a), and

c) a step of reconstructing the movements of the line of sight (V) over the time horizon [Ti, Tf] by integrating, filtering and possibly resampling the whole set of elementary variations reconstructed in step (b).

**2.** Method according to claim 1, **characterized in that** step (a) implements a matching of characteristic zones of images that is based on a geometric, radiometric or textural resemblance between at least two images acquired during the picture shot.

**3.** Method according to one of claims 1 and 2, **characterized in that** at least one of the following procedures is used to select the characteristic zones associated with a given picture-shot date Tn:

- selection of the points with double gradient greater than a given threshold in a zone of the image corresponding to the picture shot taken in the vicinity of the instant Tn;
- selection of points having positions that are predetermined independently of the content of the image in the vicinity of these points, with possible rejection of points for which a matching quality criterion is below a given threshold;
- selection of predetermined points, given by a priori knowledge of particular elements present in the scene;
- selection of a subset of points on the basis of a set of characteristic points calculated by one of the above procedures or a similar procedure, so as to maximize the spatial distribution of the said points, and the quality of matching of the characteristic zones in the vicinity of these points;
- selection of a vignette, typically of a few tens of pixels to a few hundred pixels, in the vicinity of the points so as to improve the quality of matching.

**4.** Method according to one of claims 1 to 3, **characterized in that** the matched images are shot in spectral bands that may be identical or different.

5. Method according to one of the preceding claims, **characterized in that**, in step (b), the said deviations involved in the quadratic criterion to be minimized are weighted by a positive scalar proportional to the estimated quality of the said matching of the said characteristic zones between the two images, the estimate of the said quality of matching being calculated according to the prior art procedures (correlation calculation for example).

6. Method according to one of the preceding claims, **characterized in that**, in the course of step (c), an integration, a filtering and possibly a resampling of the attitude variation estimates arising from step (b) are performed so as to reconstruct the movements of the line of sight of the instrument, apart from absolute component of the orientation of sighting, over the time interval [Ti, Tf] by at least one of the following procedures:

- using an inverse filtering, making it possible to enhance certain attenuated frequencies while limiting the impact of noise, for example a Wiener or Kalman filter,
- by fitting an analytical model, for example estimating the coefficients of a polynomial of degree not exceeding 5 in general according to a least squares procedure.

7. Method according to one of the preceding claims, **characterized in that**, in the absence of sufficient quality matching of the characteristic zones selected at the instant Tn, the orientation of the line of sight at the instant Tn is advantageously calculated by interpolating the line-of-sight orientations reconstructed by applying the method at instants preceding and following Tn.

8. Method according to claim 6 or 7, **characterized in that** the a priori knowledge of the frequency content of the variations of the orientation of the line of sight is used to perform a filtering prior to step (c) that retains only the frequencies concerned.

9. Method according to one of the preceding claims, **characterized in that** a number of images of one and the same scene that is strictly greater than two is used, the method is applied to several pairs of images and the results obtained from the various pairs of images of the same scene are hybridized by implementing a global or iterative refinement of the current knowledge of the orientation of the line of sight during the picture shot.

10. Method according to claim 9, **characterized in that** the method is applied to a first pair of images advantageously from among the pairs of images that are assumed to be best correlated, for example those shot in one and the same spectral band, so as to obtain a first reconstruction of the movements of the line of sight of the instrument in the course of the picture shot, then another pair of images is processed, initializing the matching model on the basis of the line-of-sight orientation values calculated in the previous step, and so on and so forth until the data are exhausted or convergence is obtained.

11. Method according to claim 10, **characterized in that** the instrument makes it possible to form at least three images offset over time, at least two of the images exhibiting a strong mutual correlation, and at least one other image that is weakly correlated with the other two, and that the movements of the line of sight are corrected on at least one image that is weakly correlated with the other two by reconstructing the said movements of the line of sight by applying the method to at least one pair of images exhibiting a strong mutual correlation.

12. Method according to one of the preceding claims, **characterized in that** the matching model is initialized with a priori knowledge of the orientation of the line of sight in the course of the picture shot, the said a priori knowledge arising from an orientation setpoint or from a measurement derived from attitude sensors such as star sensors, gryometers, or from a knowledge of the absolute position on the surface of the terrestrial globe of characteristic zones recognizable in the image, or a hybridization of such knowledge.

13. Method according to one of the preceding claims, **characterized in that** parallax effects are taken into account in the matching model, using a priori knowledge of the relief of the scenes observed.

14. Method according to one of the preceding claims, in which the images are obtained by a detector operating according to the push-broom principle.

15. Application of the method according to one of claims 1 to 14 to the calculation of the orientation of the line of sight (V) of a picture-taking optical instrument (12) onboard a satellite (10), **characterized in that**:

- the said instrument (12) comprises in its focal plane (13) at least one strip-type detector (14), typically of one to a few tens of lines (15) and each comprising a few thousand to ten thousand pixels,
- the said satellite (10) is placed in a non-geostationary orbit,
- the satellite (10) is pointed in such a way that the said at least one strip-type detector (14) scans the zone (16) to be observed during picture shots, and
- the method according to one of claims 1 to 13 is applied to estimate the orientation of the line of sight (V) of the instrument (12) in the course of a picture shot.

16. Application of the method according to one of claims 1 to 14 to the calculation of the orientation of the line of sight (V) of a picture-taking optical instrument (12) onboard a satellite (10), **characterized in that**:

- the said instrument (12) comprises in its focal plane (13) at least one strip-type detector (14),
- the line of sight (V) of the instrument (12) is controlled in such a way that the said at least one detector (14) scans the surface (16) of the terrestrial globe (17), either by rotation of the satellite (10), or by the scanning of an orientatable mirror (34) placed in the optical path of the instrument (12), and
- the method according to one of claims 1 to 13 is applied to estimate the orientation of the line of sight (V) of the instrument (12) during a picture shot.

17. Application of the method according to claim 16, **characterized in that** the orbit of the satellite (10) is geostationary.

18. Application of the method according to any one of claims 15 to 19, **characterized in that**

- the said instrument (12) comprises in its focal plane (13) at least two strip-type detectors, the strips being aligned in such a way that their lines and columns are respectively substantially parallel, and the two strips of each pair of strips, at least one pair of which is thus in the focal plane (13), being separated from one another by a distance of typically a few fractions of a mm to a few mm in the focal plane (13), the detectors thus observing approximately the same portion of the scene during a picture shot, with a time offset depending directly on the distance between the detectors at the focal plane (13).

19. Application of the method according to one of claims 15 to 18, **characterized in that** each line (15) of the detectors of the focal plane forms an image of the scene, and that a subset of the images thus created by the whole set of detectors of the focal plane (13) can be processed according to the method for restoring the orientation of the line of sight (V) of the instrument (12).

20. Application of the method according to any one of claims 15 to 17, **characterized in that**:

- the instrument (12) comprises at least one main strip-type detector (14) in its focal plane (13), this detector (14) being used for image capture according to desired mission characteristics (sweep width, resolution, image quality, etc.),
- at least one dedicated detector (18), of smaller size, typically a matrix of 100 x 100 pixels, or a strip of 1000 x 10 pixels, is added to the focal plane for the purposes of applying the method according to one of claims 1 to 13, and the said dedicated detector (18) is placed a certain distance from the said main detector (14), and
- the method according to one of claims 1 to 14 is applied.

21. Application of the method according to any one of claims 18 to 20, **characterized in that** the separation of the detectors in the focal plane (13) is optimized with the aim of reconstructing the movements of the line of sight (V) in a given frequency band.

22. Application of the method according to any one of claims 15 to 17, **characterized in that** there is just one detector (14) at the focal plane (13) scanning the scene, and that the method is applied to at least two images (14a, 14b) formed on the basis of at least two lines (15) of the detector (14).

23. Application of the method according to claim 22, **characterized in that** the choice of the at least two lines ($15_1$, $15_2$) of the detector (14) that are used to form the at least two images is optimized with the aim of reconstructing the movements of the line of sight (V) in a given frequency band.

FIG. 1

FIG. 2

FIG. 3

FIG. 4

| MISE EN CORRESPONDANCE DES IMAGES |
| --- |

| ESTIMATION DES VARIATIONS $\Delta\theta x$, $\Delta\theta y$, $\Delta\theta z$ |
| --- |

| INTÉGRATION ESTIMATION D'ATTITUDE |
| --- |

Image 2                                    Image 1

A2                                         A1

Modèle            Modèle

P

# FIG. 5

Θ → | Système G(ω) | → ΔΘ → ⊗ → | Estimateur H(ω) | → Θ$_{est}$

B

+

+

# FIG. 6

## Filtre pseudo-inverse

1.8
1.6
1.4
1.2
1
0.8
0.6
0.4
0.2
0

Amplitude

0     50     100     150     200     250     300

Fréquence (Hz)

# FIG. 7

**Filtre pseudo-inverse**

FIG. 8

**Filtre Pseudo-inverse : impact du coefficient k**

FIG. 9

k = 0.1    ----k = 1

**Filtre pseudo-inverse : impact du coefficient k**

FIG. 10

k = 0.1    ----k = 1

**Filtre pseudo-inverse : impact de la durée τ**

——Tau = 7.44 ms     ——Tau = 159 ms     **Fréquence (Hz)**

## FIG. 11

**Filtre pseudo-inverse : impact de la durée τ**

——Tau = 7.44 ms     ——Tau = 159 ms     **Fréquence (Hz)**

## FIG. 12

FIG. 13

FIG. 14

Estimation initiale du profil temporel
de l'orientation de la ligne de visée

Affinage itératif sur :

- le choix des couples d'images,
- la sélection des points,
- la méthode de filtrage

Images

Modèle
instrument,
Orbitographie,
Datation,
MNE

**Sélection des points utilisés pour la mise en correspondance** — 20

**Prédiction des points homologues par modélisation géométrique** — 22

**FIG. 15**

24 — **Mise en correspondance point à point**

26

Points
homologues prédits

$+$ $\otimes$ $-$

Points
homologues mesurés

Résidus

**Estimation des variations angulaires avec prise en compte du modèle géométrique** — 28

Mesures $\Delta\Theta$

**Filtrage :
Fréquentiel passe bas
Estimation par méthode de Wiener
Estimation paramétrique aux moindres carrés** — 30

32 — $-$ $\otimes$ $+$

Estimation affinée du profil
temporel d'orientation de la visée

FIG. 16

**FIG. 17**

**FIG. 18**

FIG. 19

FIG. 20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2828314

**Littérature non-brevet citée dans la description**

- **KIM S P et al.** « Subpixel accuracy image registration by spectrum cancellation » ; Image and multidimensional signal processing. *PROCEEDINGS OF THE INTERNATIONAL CONFERENCE ON ACOUSTICS, SPEECH, AND SIGNAL PROCESSING (ICASSP),* 27 Avril 1993